# EUROPEAN PATENT SPECIFICATION

(11) **EP 0 396 574 B1**
(45) Date of publication and mention of the grant of the patent: **01.12.1993**
(21) Application number: 89900008.7
(22) Date of filing: 02.12.1988
(51) Int. Cl.: B23K 25/00, C23C 26/02

(54) **ELECTROSLAG SURFACING**
ELEKTROSCHLACKENOBERFLÄCHENBEARBEITUNG
SURFACAGE SOUS LAITIER ELECTROCONDUCTEUR

(30) Priority: 03.12.1987 AU 5724/87
(43) Date of publication of application: 14.11.1990
(73) Proprietor: COMMONWEALTH SCIENTIFIC AND INDUSTRIAL RESEARCH ORGANISATION, Campbell, ACT 2601 (AU); VIDA-WELD PTY. LIMITED, Caringbah New South Wales 2229 (AU)
(72) Inventor: DICK, Ian, Robert, Linden Park, S.A. 5065 (AU); HENDERSON, Ian, Douglas, Glen Osmond, S.A. 5064 (AU); KIMPTON, Gordon, Lindsay, Glenalta, S.A. 5052 (AU); WYATT, David, Stanley, Woronora, NSW 2232 (AU)
(74) Representative: Carter, Gerald
(86) International application number: AU8800465
(87) International publication number: WO8905207

(56) References cited:
- DE-B- 1 101 653
- FR-A- 2 179 636
- FR-A- 2 194 524
- GB-A- 927 914
- US-A- 3 254 197
- US-A- 3 361 562

## Description

This invention relates to an apparatus and method for electroslag surfacing of metal plate.

The invention enables metal plate of a selected thickness to be clad, over a major surface, on a continuous or semi-continuous basis. The invention can be used to clad metal plate of a variety of thicknesses, so as to achieve a wide variety of cladding to plate thickness ratios. The invention is particularly well suited to the cladding of relatively light gauge flat metal plate, such as from 4 to 12mm thick, with a relatively thick layer, such as from 2 to 10mm thick, of cladding metal. The metal plate may be mild or low alloy steel plate, while the cladding metal may be a wear and/or corrosion resistant material.

DE-B-1101653 discloses a rudimentary form of apparatus for electroslag surfacing. In the disclosed apparatus there is relative longitudinal movement between a workpiece and a trough, and a strip electrode is unwound from a coil and fed into a flux bath of the trough for generating molten metal in the bath. The trailing side of the trough defines a gap through which plated metal passes in operation.

GB-A-927914 discloses a method and apparatus for arc welding of a vertical seam where the speed at which a welding current contact member is raised, as the seam progresses, is controlled in accordance with the burn-off rate of the electrode.

According to the invention there is provided apparatus for electroslag surfacing of metal plate, the apparatus comprising plate feeder means by which metal plate to be surfaced is moved longitudinally during an electroslag cladding operation, and a flux mould arrangement positioned to contain molten flux during a cladding operation so that molten flux is maintained on an upper surface of the metal plate as the latter moves below the mould arrangement, to enable electroslag cladding of the plate by a depending electrode having a lower end thereof fed to the mould arrangement; characterised in that a plate feeder assembly comprises the plate feeder means and includes an elongate, horizontally disposed feeder table having an approach-end section and a runout-end; in that an electroslag surfacing installation, including the flux mould arrangement, is operable to clad an upper surface of the metal plate as it is conveyed along the plate feeder table, with the surfacing installation being located intermediate said sections; the plate feeder assembly having conveying means, spaced along the feeder table, on which the metal plate is conveyed in a feeding direction from the approach-end section to, and beyond, the surfacing installation so as to discharge from the surfacing installation along the run-out section; the flux mould arrangement of the surfacing installation being positioned to contain molten flux during a cladding operation so that a sufficient depth of flux is maintained on said upper surface for efficient electroslag cladding; the surfacing installation further including an electrode holder and feeder assembly which is spaced over the plate feeder assembly, above the mould arrangement, and which extends laterally of the plate feeder assembly relative to said feeding direction; the electrode holder and feeder assembly being adapted to hold electrode means and being connectable to a power source for the supply of electric power to said electrode means for an electroslag operation, the electrode holder and feeder assembly being operable to adjust said electrode means vertically such that, as metal plate to be surfaced by a cladding operation is conveyed along the plate feeder assembly in said feeding direction, the electrode holder and feeder assembly is operable:
- to lower the electrode means into the mould arrangement to bring a lower end of the electrode means into contact with said upper surface of the metal plate and establish current flow therebetween,
- then to raise the electrode means to a height initiating conditions providing an arc between said lower end and upper surface, and
- with establishment of a molten slag pool in said mould arrangement which submerges and extinguishes said arc, to retain said lower end of the electrode means at an operating height above the upper surface sufficient to maintain efficient electroslag operation by conduction in said slag pool.

The feeder table may comprise a horizontally disposed frame structure supported on a base.

Said conveying means may consist of a series of conveyor rollers which are rotatable on axes extending transversely with respect to the feed direction, the rollers of the series being spaced from each other in said direction, each roller having its ends journalled in a respective bearing block adjacent a respective elongate side member of said frame structure.

Said plate feeder assembly may have drive means by which the metal plate is moved along the conveying means in said feed direction, at least one of said conveyor rollers forming part of said drive means and being rotatable under the action of a drive motor of said drive means.

There may be included biasing means operable to bear on the upper surface of the metal plate to maintain said plate in driving engagement with said at least one conveyor roller.

The plate feeder assembly may have drive means by which the metal plate is moved along the conveying means in the feed direction, and the drive means may include a transverse pair of vertically spaced feed rollers between which the plate passes in said feed direction and a drive motor operable to drive at least one of the rollers of said pair.

Said pair of feed rollers may comprise a lower feed roller having each of its ends journalled in a respective one of bearings located at each side of the feeder table, and an upper feed roller having each of its ends located in, and adjustable along, a respective slide, the upper roller being vertically adjustable in said slides to enable variation in clamping pressure exerted by the feed rollers on said metal plate.

Said upper roller may have a sleeve provided over its external surface, said sleeve being of resilient material.

There may be provided a respective drive means at each of the approach-end section and the runout-end section of the feeder table such that the metal plate is fed positively to the surfacing installation for cladding and clad plate is fed positively away from said installation, each said drive means including a transverse pair of vertically spaced feed rollers between which the plate passes in said feed direction and a drive motor operable to drive at least one of the rollers of said pair, and wherein said pair of feed rollers of each said drive means may comprise a lower feed roller having each of its ends journalled in a respective one of bearings located at each side of the feeder table, and an upper feed roller having each of its ends located in, and adjustable along, a respective slide, the upper roller being vertically adjustable in said slides to enable variation in clamping pressure exerted by the feed rollers on said metal plate.

The upper roller of the drive means at the runout-end section of the feeder table may be mounted so as to be able to float vertically through a distance sufficient to accommodate undulations in the metal plate caused by the electroslag operation.

There may be included at least one centering means operable to engage side edges of the metal plate and to constrain the plate against lateral movement as it is conveyed in said feeding direction. The centering means may include a pair of blocks spaced laterally with respect to the feeding direction and between which the metal plate is conveyed, each block being screw-engaged with a respective end of a rod journalled in bearings mounted on the feeder table, the rod being rotatable to move said blocks laterally in unison and to adjust the spacing therebetween to accommodate metal plate of different widths.

The mould arrangement may extend laterally with respect to the feeding direction across substantially the full operating width of the plate feeder table, and may comprise a peripheral wall bounding a mould cavity which has an open top and bottom, at least a major portion of the bottom of the mould being substantially closed by the metal plate during a cladding operation so as to retain a molten slag pool therein. There may also be included a respective shoe adjacent each side of the plate feeder table, each shoe being located under a respective end portion of the mould arrangement for closing a region of the bottom of the mould at said end portion, each shoe being resiliently urged by biasing means so as to seal against a side edge of the metal plate.

The peripheral wall comprising said mould arrangement may define a passage therearound, said peripheral wall being adapted for connection to a source of cooling water for circulation of cooling water through said passage.

The aforesaid electrode holder and feeder assembly may be adapted to hold electrode means comprising a plurality of electrodes, such that said electrodes are in laterally spaced relationship across at least part of the lateral extent of the plate feeder assembly. Said electrode holder and feeder assembly may include a header structure mounted above and extending transversely across the feeder table in vertically spaced relation thereto, and a respective electrode holder for each electrode, each electrode holder being mounted in relation to the header structure by a respective electrode feeder means operable to move its electrode holder vertically, relative to the header structure, towards and away from the feeder table.

Each electrode feeder means may comprise an actuator which is mounted between the header structure and the respective electrode holder and is operable to provide reversible linear drive by which its electrode holder is vertically movable.

Each said actuator may comprise a reversible stepping motor, and each motor having an output shaft coupled to a respective upwardly extending rod having a helical thread, with each electrode holder having a shaft parallel to the rod, a toothed bracket on the shaft meshing with the thread of rod such that, as the rod is rotated on actuation of its motor, the bracket, shaft and electrode holder is drawn along the rod.

Said electrode holder and feeder assembly may include at least one busbar by which it is connectable to the power source for a supply of electric power to said electrodes, at least one busbar being electrically connected to the holder for each electrode by a respective cable for each holder, each cable being of a length accommodating vertical movement of its holder under the action of the respective electrode feeder means. There may be provided electrical contact brushes positioned on said plate feeder assembly for contacting the metal plate from below, said contact brushes providing part of a return path for current generated by said power source during electroslag operation.

The surfacing installation may further include a hearth block arrangement mounted below the mould arrangement, the hearth block arrangement being positioned to engage the metal plate from below so as to maintain the metal plate in relation to the mould arrangement and to provide means for cooling the plate.

The surfacing installation may further include clamping means operable to apply a downwards force on the upper surface of the metal plate, the clamping means cooperating with the hearth block arrangement to maintain the metal plate in relation to the flux mould arrangement, the clamping means being a freely rotatable clamping roll which extends laterally with respect to the feed direction, the clamping roll having each of its ends journalled in respective bearing in respective spring loaded bearing housing, the hearth block arrangement being secured between opposed sides of the plate feeder assembly, and adapted for water cooling to enhance cooling of the plate from below.

Said hearth block arrangement may be urged upwardly, so as to bear against the metal plate from below, under the action of urging means comprising pneumatic or hydraulic cylinders, and said hearth block arrangement may comprise a plurality of cooling blocks arranged in series between opposed sides of the plate feeder assembly, said urging means being operable to urge each said cooling block such that each cooling block is individually urged upwardly.

There may be included a flux feeder arrangement located above, and adapted to supply flux to, the flux mould arrangement, said flux feeder arrangement being located adjacent the electrode holder and feeder arrangement, and operable to supply flux to the flux mould arrangement over substantially the full lateral extent of the flux mould arrangement.

The flux feeder arrangement may have a flux feeder roll, a flux hopper on the intake side of the feeder roll for the supply of flux to the feeder roll, and a distribution chute for conducting flux received from the feeder roll into the flux mould arrangement.

The apparatus may include a metal powder feeder arrangement located above, and adapted to supply metal powder to, the flux mould arrangement, the powder feeder arrangement being located adjacent the electrode holder and feeder arrangement, and operable to supply powder to the flux mould arrangement over substantially the full lateral extent of the flux mould arrangement.

The powder feeder arrangement may have a powder feeder roll, a powder hopper on the intake side of the feeder roll for the supply of powder to the feeder roll, and a distribution chute for conducting powder received from the feeder roll into the flux mould arrangement.

The apparatus may include control means operable to monitor or monitor and regulate each of the conveying of metal plate along said feeder table, electric power supplied to the electrode means by said power source and operation of said electrode holder and feeder assembly to adjust said electrode means vertically.

The invention also provides a method of electroslag surfacing of metal plate, in which the plate is moved relative to a flux mould arrangement to enable electroslag cladding of an upper surface of the plate by means of a depending electrode having a lower end thereof fed to the mould arrangement, said method may comprise the steps of:
(a) presenting the plate to a plate feeder assembly including an elongate, horizontally disposed feeder table having an approach-end section and a runout-end section.
(b) conveying the plate, with a major surface thereof uppermost, along said feeder table in a feeding direction from said approach-end section to said runout-end section, and
(c) subjecting said plate to an electroslag operation at a surfacing installation located intermediate said sections of the feeder table to provide a cladding metal layer on said uppermost surface, said operation comprising:
   (i) passing the metal plate, at said surfacing installation, under a flux mould arrangement and under an electrode holder and feeder assembly having depending electrode means vertically in line with the interior of the mould arrangement;
   (ii) operating said electrode holder and feeder assembly to lower the electrode means into the mould arrangement to bring a lower end of the electrode means into contact with said upper surface and to establish current flow between the electrode means and said metal plate, under the action of electric power supplied to the electrode means by a power source in a circuit completed by said metal plate;
   (iii) operating said electrode holder and feeder assembly, on establishing said current flow, to raise the electrode means to a height initiating an arc between the lower end of the electrode means and said uppermost surface;
   (iv) on establishing said arc, charging flux to mould arrangement and melting the flux therein to establish a molten slag pool which overlies said uppermost surface and which submerges and extinguishes said arc; and
   (v) supplying metal alloy powder material to said mould arrangement, while said electrode holder and feeding arrangement is controlled to retain the lower end of the electrode means at an operating height above the uppermost surface to maintain efficient electroslag operation by conduction in said slag pool, said metal alloy material being provided at the interface between the slag pool and the uppermost surface and melted in said mould arrangement to clad said uppermost surface as the metal plate is conveyed under the mould arrangement.

Said metal alloy material may be provided as a metered and consolidated mixture of alloy powder precoated on said major surface prior to the metal plate being presented to the plate feeder assembly.

Said plate may be conveyed to said surfacing installation under the action of a first transverse pair of vertically spaced feed rollers located at said approach-end section of the plate feeder assembly, the plate being passed in said feed direction between said rollers under the action of a drive motor operating to drive at least one of the rollers of said first pair.

Said plate may be conveyed from said surfacing installation under the action of a second transverse pair of vertically spaced rollers located at said runout-end section of the plate feeder assembly, the plate being passed in the feed direction between said rollers of said second pair under the action of a drive motor operating to drive at least one of the rollers of said second pair.

Said plate may be constrained at side edges thereof against movement laterally with respect to said feed direction as it is conveyed along said feeder table.

Said plate may pass under said flux mould arrangement such that the upper surface of said plate substantially closes an open bottom of said flux mould arrangement and at least partially retains said molten slag pool in said flux mould arrangement.

A respective shoe adjacent each side of the plate feeder assembly may be biased to seal against a side edge of the plate as the latter passes under the flux mould arrangement, the plate and said shoes together substantially fully closing said open bottom to retain said molten slag pool in said flux mould arrangement, coolant being circulated through a peripheral wall defining said flux mould arrangement.

Said electrode means may comprise a plurality of elongate electrodes, each of said electrodes being held by a respective electrode holder having an associated respective electrode feeder means, said electrodes being disposed vertically in an array spaced laterally with respect to said feed direction, each electrode feeder means being individually operated to bring the lower end of its electrode into contact with said metal plate to establish said current flow, to raise its electrode to said operating height to initiate said arc, and to retain the lower end of its electrode at said spacing to maintain said electroslag operation.

Said plate may be maintained in relation to the bottom of said flux mould arrangement by means of a hearth block arrangement which bears against the plate from below, the hearth block arrangement providing cooling of the plate, coolant being circulated through said hearth block arrangement and regulating the extent of cooling of said plate, said hearth block arrangement optionally being urged upwardly so as to bear against the plate from below.

The conveying of said plate along said feeder table, the supply of electric power to the electrode means and operation of the electrode holder and feeder assembly to adjust said electrode means vertically may be monitored or monitored and regulated during said electroslag operation so as to maintain a required level of efficiency of said operation.

In order that the invention may more readily be understood, description now is directed to the accompanying drawings in which:

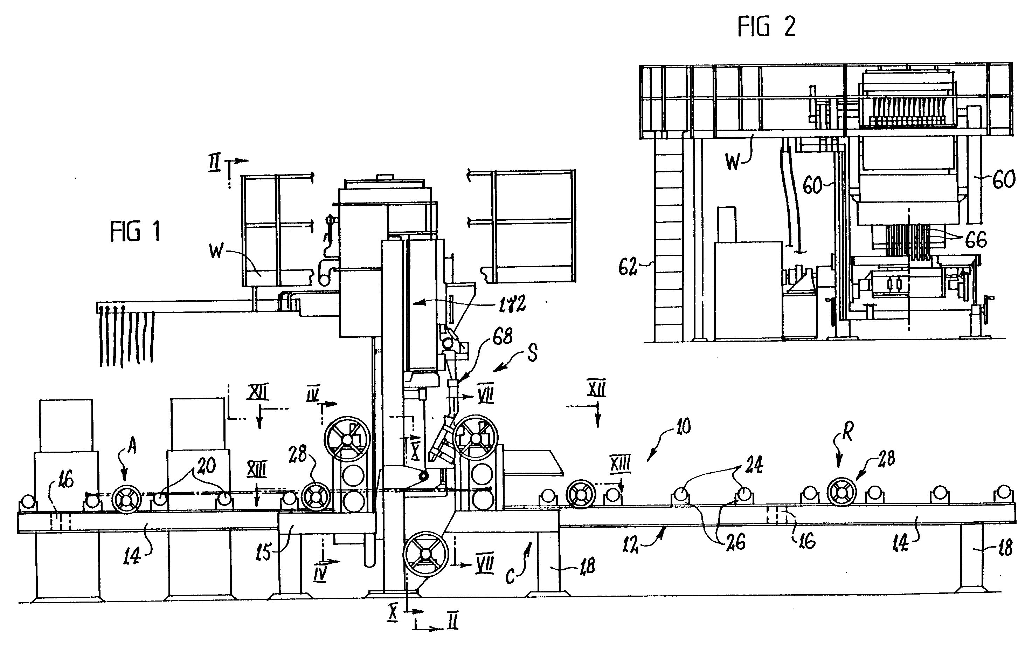

Figure 1 is a side elevation of a machine according to the invention,
Figure 2 is a sectional view on line II-II of Figure 1;
Figure 3 is a plan view of the machine of Figure 1;
Figure 4 is a part sectional view taken on line IV-IV of Figure 1;
Figure 5 is a plan view of the part of the machine shown in Figure 4;
Figure 6 is a sectional view taken on line VI-VI of Figure 4;
Figure 7 is a part sectional view taken on line VII-VII of Figure 1;
Figure 8 is a plan view of the part of the machine shown in Figure 7;
Figure 9 is a sectional view taken on line IX-IX of Figure 7;
Figure 10 is a part sectional view taken on line X-X of Figure 1;
Figure 11 is a plan view of the part of the machine shown in Figure 10;

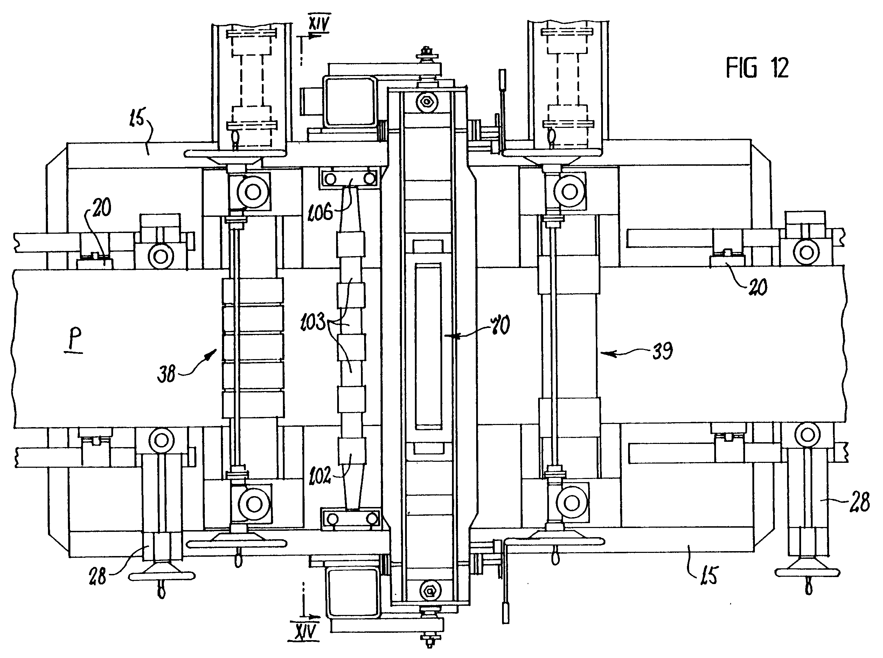

Figure 12 is a part sectional view taken on line XII-XII of Figure 1;
Figure 13 is a sectional view taken on line XIII-XIII of Figure 1;
Figure 14 is a view taken on line XIV-XIV of Figure 12;

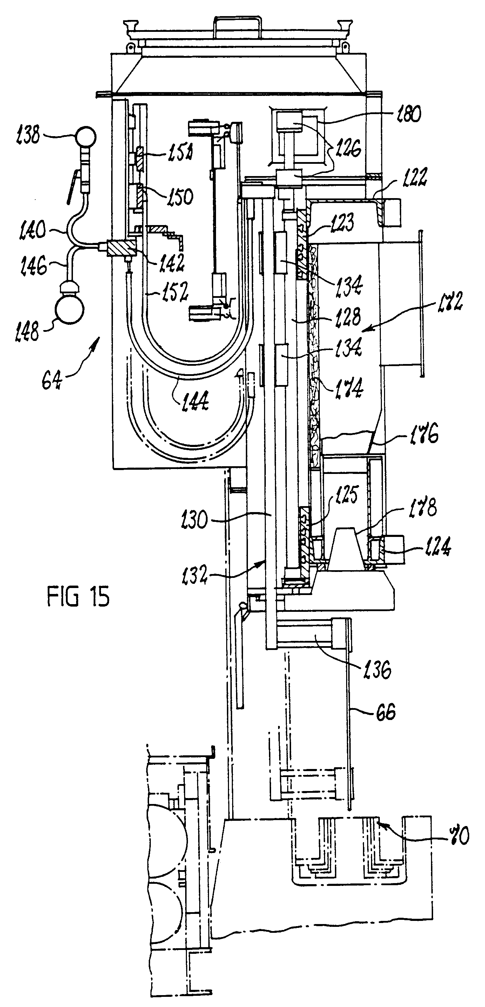

Figure 15 is a sectional view taken on line XV-XV of Figure 3;

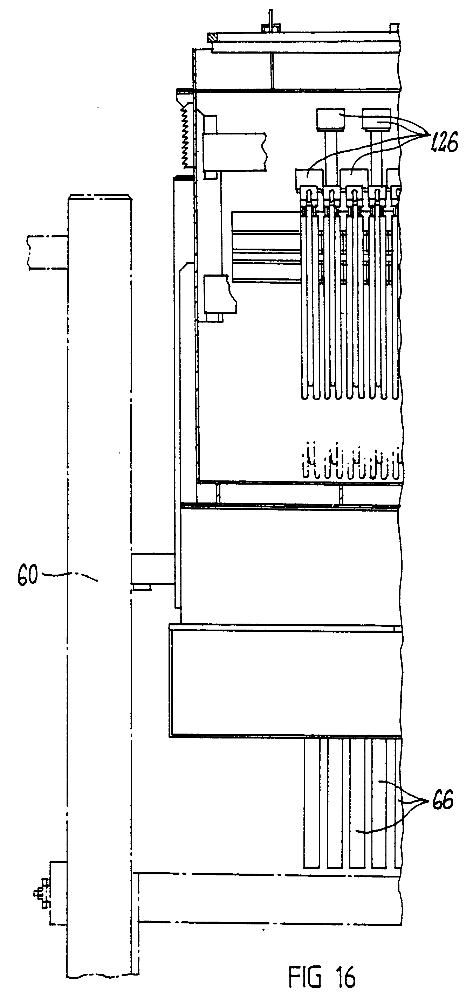

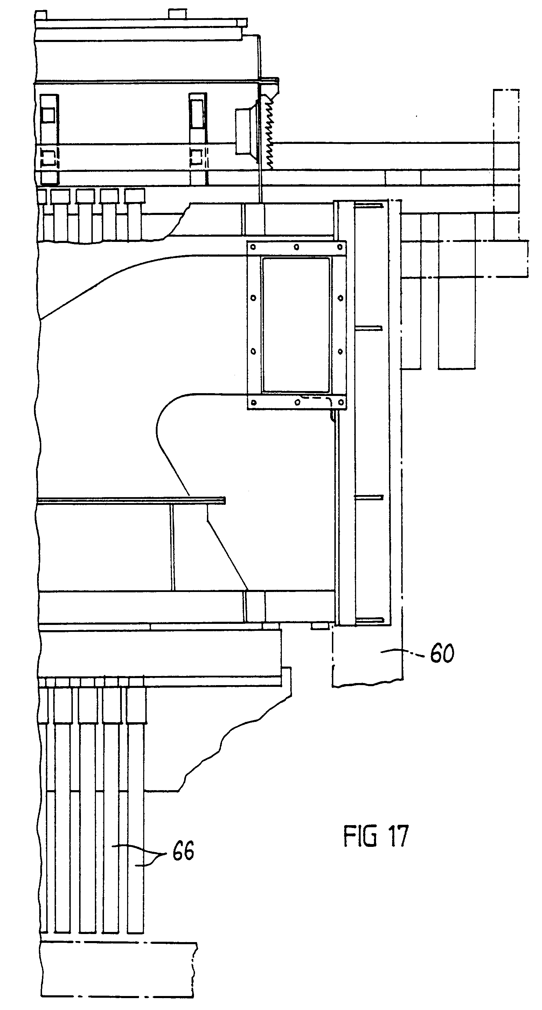

Figures 16 and 17 are respective half sectional views taken on lines XVI-XVI and XVII-XVII of Figure 3;

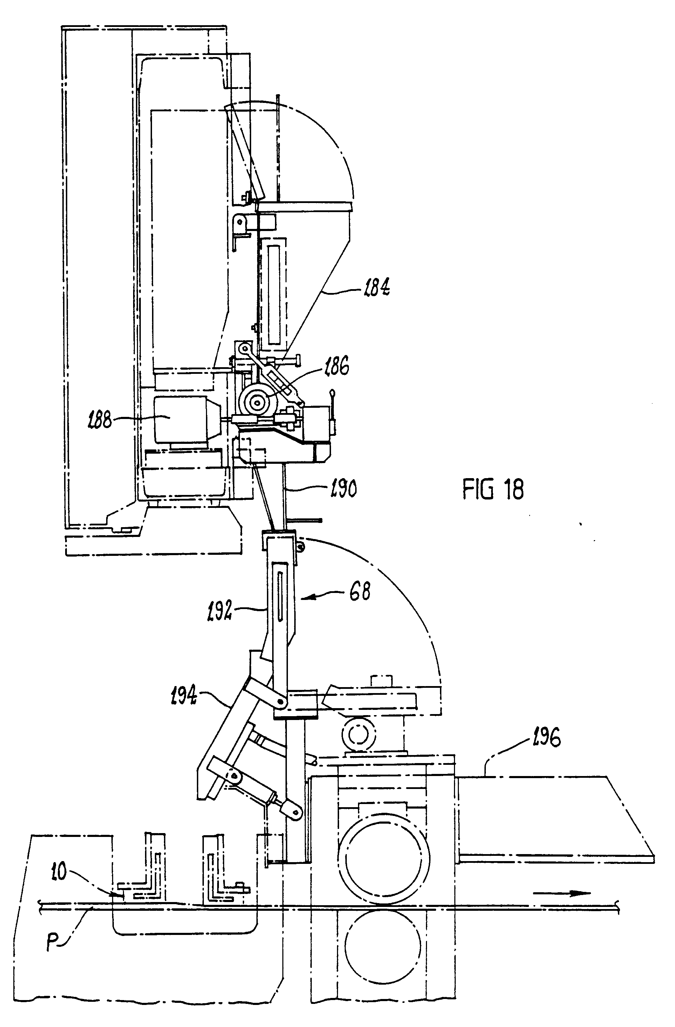

Figure 18 is a sectional view taken on line XVIII-XVIII of Figure 3; and

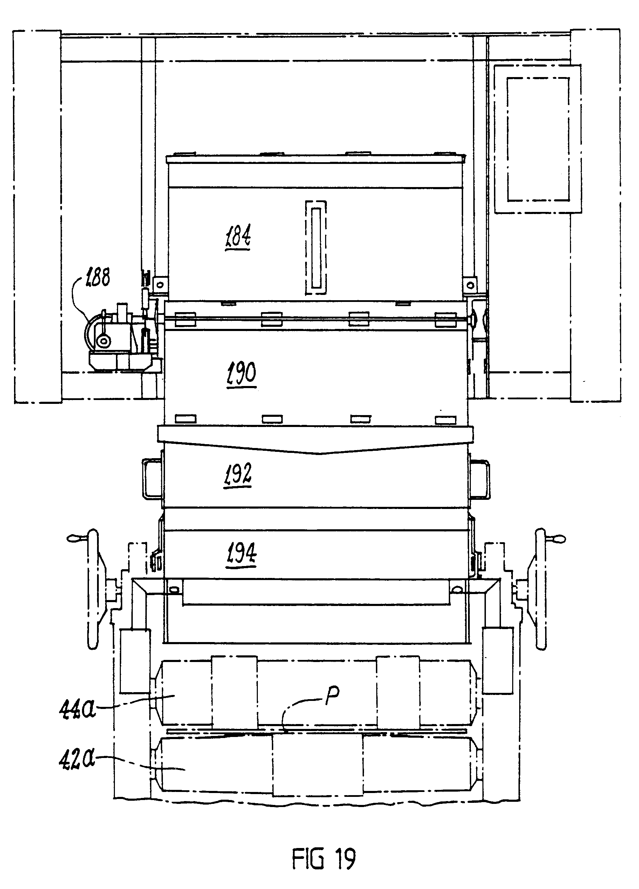

Figure 19 is an elevation and part sectional view taken on line XIX-XIX of Figure 3.
Figure 20 is a sectional view on line XX-XX of Figure 13;
Figure 21 is a sectional view on line XXI-XXI of Figure 20;
Figures 22 and 23 correspond to the views of Figures 20 and 21, but illustrate a first modified hearth block assembly; and
Figures 24 and 25 correspond to Figures 20 and 21, but illustrate a second modified hearth block assembly.

The machine 10 of the drawings has a plate feeder assembly comprising a table 12 having an approach section A, a runout section R, and a central section C at which a surfacing installation S is provided between sections A,R. Plate P to be clad is able to pass along table 12 from the left hand end of section A, to pass through the surfacing installation S at which it is to be clad, and to exit along section R to be discharged from the right hand end of table 12.

Each section A,R comprises an elongate frame formed of metal members. Sections A,R comprise side members 14 held in spaced relation by transverse members 16, and supported on posts 18. At section C, the width of table 12 is increased between side members 15, to accommodate installation S. Along section A, there is a plurality of conveyor rollers 20, each having its ends journalled in bearings 22 mounted on each side member 14. Section R has conveyor rollers 24 similarly journalled in bearings 26. Plate P approaches installation S on rollers 20 and exits therefrom on rollers 24.

To ensure plate P moves centrally along sections A,R and through installation S, each section A,R has two centering devices 28. In each case, the device 28 comprises an opposed pair of blocks 30, each of which bears against a respective edge of plate P. Blocks 30 are adjustable to accommodate plate of different widths, by each being threaded on a respective, oppositely threaded end of rod 32. A central bracket 34 restrains rod 32 against axial movement while enabling it to rotate. Either of the wheels 36 at each end of rod 32 enables rotation of rod 32 to adjust blocks 30 inwardly or outwardly in unison.

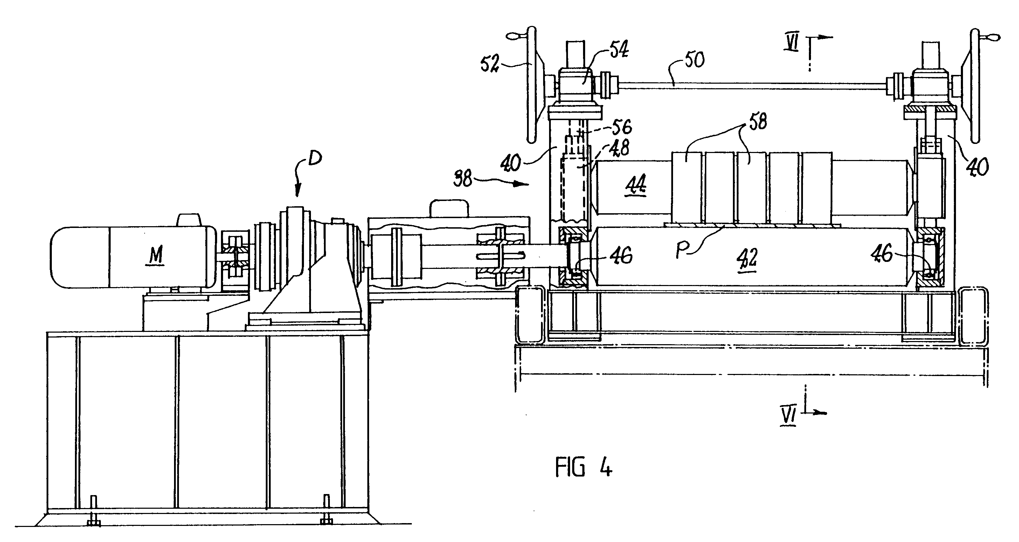

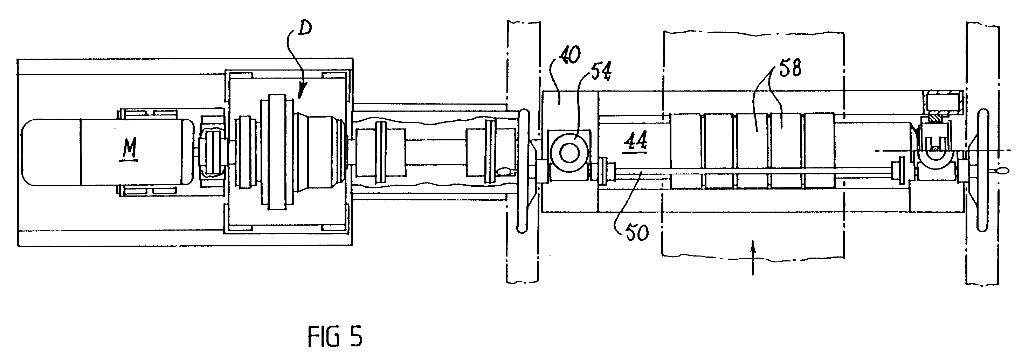

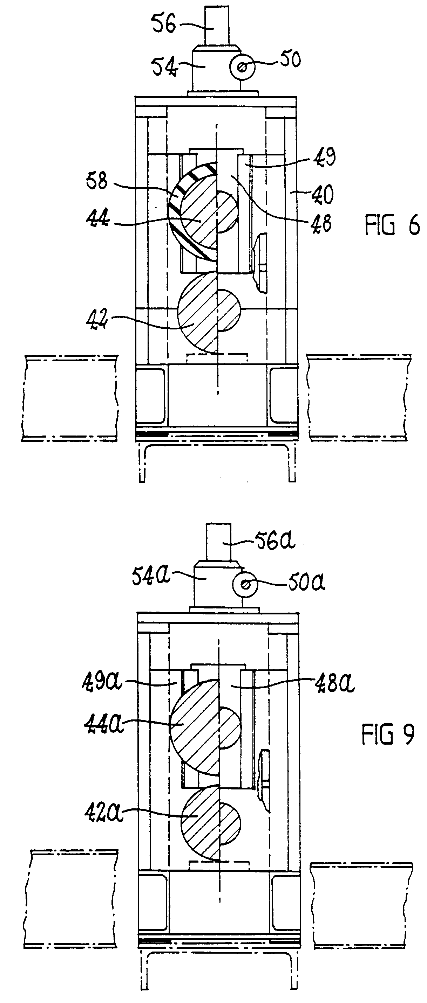

At the approach side of installation S, there is provided a plate feeder arrangement 38, while a further such arrangement 39 is provided on the outgoing side. Arrangements 38,39 provide drive means by which plate P is moved through machine 10. Arrangement 38 has an opposed pair of supports 40, each mounted on a respective member 15, a lower roller 42 and an upper roller 44 (see Figures 4 to 6). Roll 42 has its ends jounalled in bearings 46 mounted in supports 40, and is rotatable by means of variable speed motor/gearbox drive M via axially in-line drive arrangement D. Roll 44 has its ends journalled in bearing blocks 48 which are vertically adjustable in a guideway 49 defined in each support 40. For this purpose, an adjustment rod 50 extends across the upper end of each support 40, and is rotatable from either end by a wheel 52. On top of each support 40, there is a gear housing 54 through which rod 50 extends, with a threaded section on rod 50 meshing with a gear of a gear train within each housing 54. Rotation of rod 50 causes the gear trains to raise or lower spindles 56, each coupled to a respective bearing block 48, to raise or lower roll 44 and to adjust the pressure with which plate P is clamped between rolls 42,44 to achieve positive drive for plate P under the action of motor/gearbox M. Rolls 42,44 are simple cylindrical rolls, with upper roll having a resilient sleeve 58 where, as detailed below, plate P is precoated with a layer of alloy powder to provide the required cladding material. Sleeve 58 minimises break up of such coating, and may for example be of urethane and/or rubber.

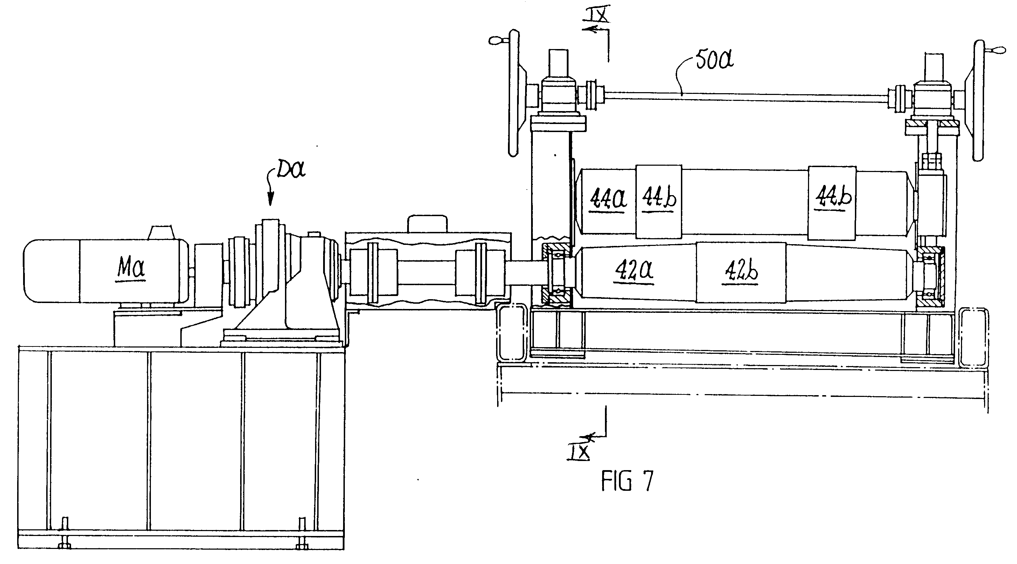

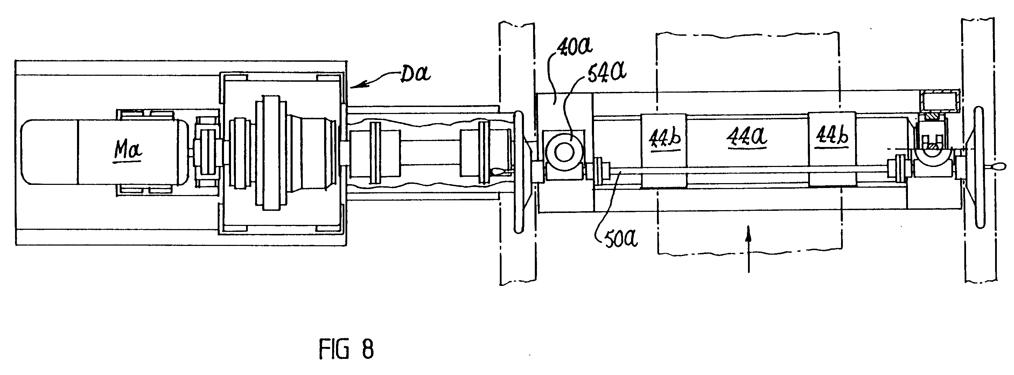

Arrangement 39 (see Figures 7 to 9) is similar overall to arrangement 38, and corresponding parts are identified by the same reference numeral with the suffix "a". However, upper roll 44a does not have a resilient sleeve since, by the time plate P reaches arrangement 39, the cladding has been provided on plate P and, while solidified, is still at a temperature level at which such sleeve on roller 44a would be destroyed. However, lower roll 42a differs in that it is profiled to provide a central land 42b about 300mm wide, while upper roll 44a is profiled to provide a respective land 44b offset axially from each end of land 42b. Alternatively, the upper roller may have a central land about 700mm wide, with shims about 5mm thick being fed between that roller and the plate, along the edges of the latter. These arrangements provide a counterbending force along the edge of the plate, at temperatures above about 100°C, and produce relatively flat clad plate after cooling to ambient temperature and contraction of the cladding or overlay.

Motor/gearboxes M, Ma, and their drives D, Da, are similar. In a commercially operable system suitable for cladding steel plate of for example 5 to 12 mm thick and 300 to 1000 mm wide, with a cladding of 2 to 10 mm thick, the rolls 42,42a can each be driven suitably by a 0.75kW D.C. variable speed motor through a CYCLODRIVE gearbox with a ratio of the order of 7569:1. Such drive can enable variation of plate speed between 0.25 to 2 mm/sec.

The machine includes electronic controls to monitor speed and torque of, and between, each of arrangements 38,39.

Surfacing installation S provides for electroslag cladding of plate P. This is achieved in an arrangement in which plate P is precoated with a metered and consolidated mixture (not shown) of alloy powders required to achieve a selected chemical composition for the cladding. In general terms, an electroslag pool (resistive heated by current flow between non-consumable graphite electrodes and plate P) is locally contained in a water-cooled mould on the surface of plate P as the latter moves through installation S. The precoated plate P is fed to installation S via feed rollers 42,44. In passing to installation S, plate P passes through a clamping assembly which cools the lower surface of plate P during an electroslag melting operation performed on the upper surface of plate P.

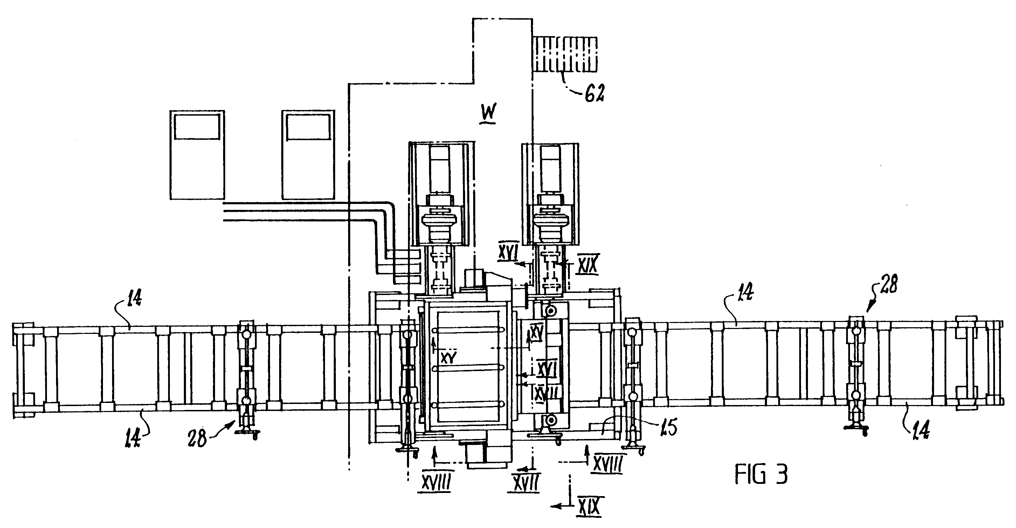

At installation S, machine 10 has at each side thereof a respective main column 60. Between the upper ends of columns 60 a working platform structure W is supported. Structure W is shown in Figure 3 in shaded outline and, as indicated therein, structure W enables an operator to move around and gain access to the upper extent of machine 10. Access to structure W is via steps 62.

Between the upper extent of column 60, there is an assembly 64 by which electrodes 66 are held and fed. On the runout side of assembly 64, there is an assembly 68 for the supply of flux while, below assemblies 64 and 68, and between installations 38 and 39, there is an assembly 70 in which electroslag operation is conducted.

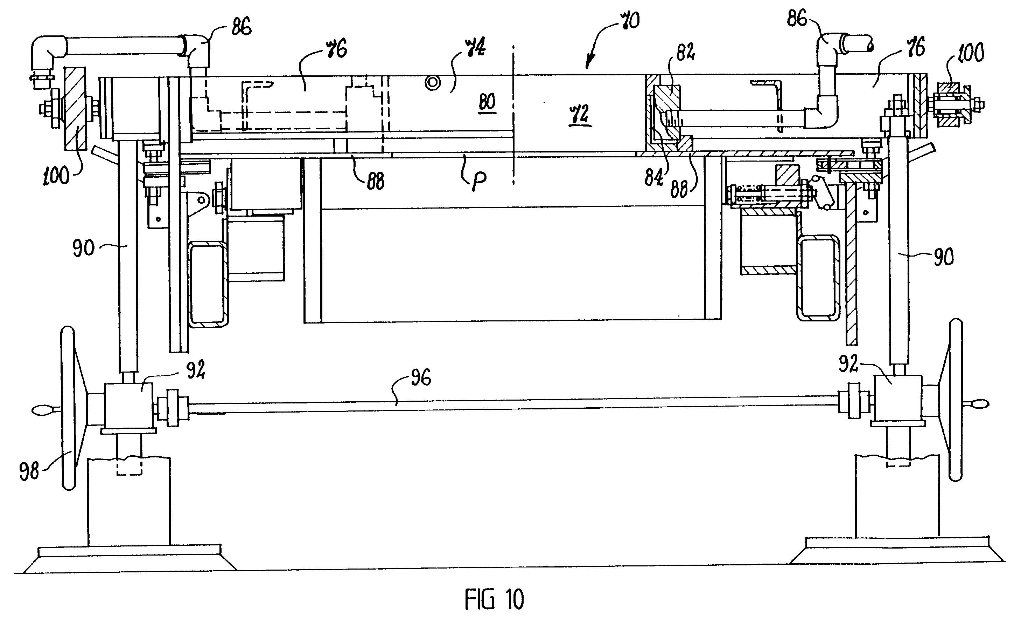

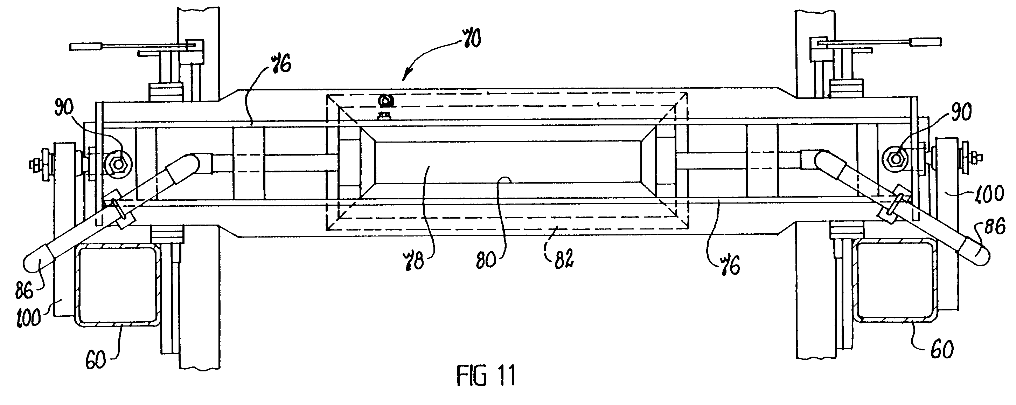

Turning first to assembly 70 and, in particular, to Figure 10 and 11, assembly 70 comprises a flux mould and quench bar constructed as one unit 72. The latter includes an elongate rectangular trough 74 having an extension bracket at each end by which it is supported adjacent each column 60. Trough 74 is open top and bottom, and is positioned so that its cavity 78 is substantially closed from below by the upper surface of plate P. Trough 74 has a peripheral wall 80 of copper or aluminium and an outer steel backing frame 82 provided for rigidity. A passage in wall 80 enables cooling water to be circulated through trough 74, principally at the exit side thereof, via pipes 86. At each end of trough 74, there is provided a respective spring loaded sheet 88 of graphite, each of which bears against an edge of plate P and completes the closure of the cavity 78, while also accommodating thermal expansion of plate P during cladding.

Trough 74 provides means for maintaining a localised molten flux pool on the upper surface of plate P. However, the water cooling also enables it to function as a quench bar, controlling the thickness of slag cover on the surface of plate P as the latter moves beyond cavity 78.

The support for unit 72 enables adjustment of its length to accommodate plate and precoating of different thicknesses. As shown in Figures 10 and 11, the outer end of each bracket 76 is supported on the upper end of the output shaft 90 of a respective worm gear actuator 92 mounted on bracket 94 of column 60. Actuators 92 are coupled by a through-shaft 96 having a wheel 98 at each end. Rotation of shaft 96 via either wheel 98 drives both actuators 92 in unison, to raise or lower unit 72 via shafts 90. An arm 100 of each bracket 76 bears against a respective column 60 and stabilises unit 72 in a central position relative to the path of travel of plate P.

Between unit 72 and installation 38, there is a clamping roll 102 while, below unit 72, there is a hearth block assembly 104. Roll 102 is positioned to engage the upper surface of plate P and to maintain a required clearance (nominally 1 mm) between the upper surface of plate P and the bottom of trough 74, by ensuring that the lower surface of plate P bears on hearth blocks of assembly 104. Roll 102, which is solid but provided with machined relief grooves 103, is journalled in bearing housings 106 on side members 15. Housings 106 are spring loaded in order to accommodate uneven coating on plate P, or to accommodate different plate and/or precoating thicknesses.

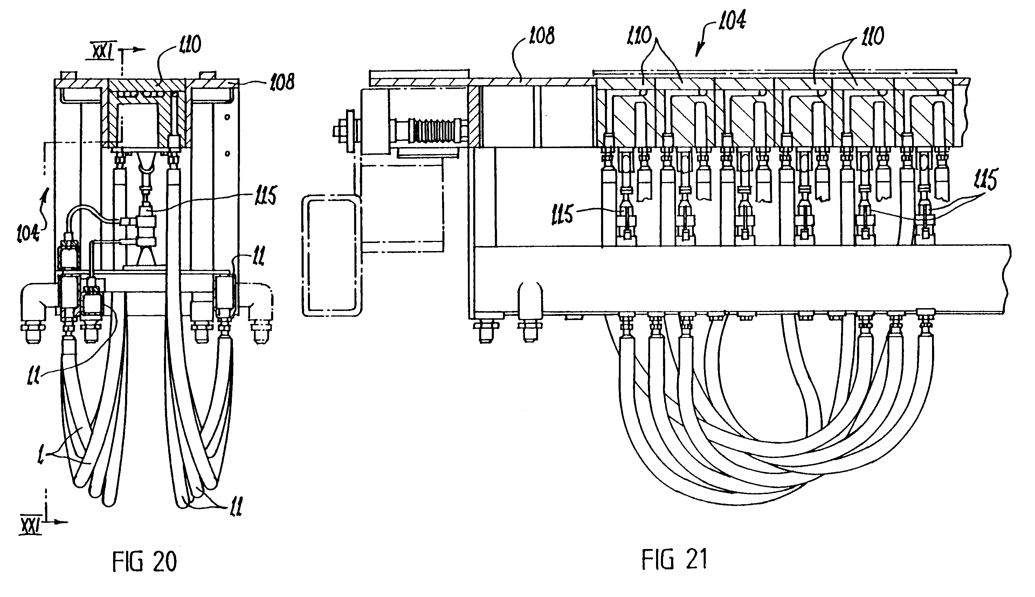

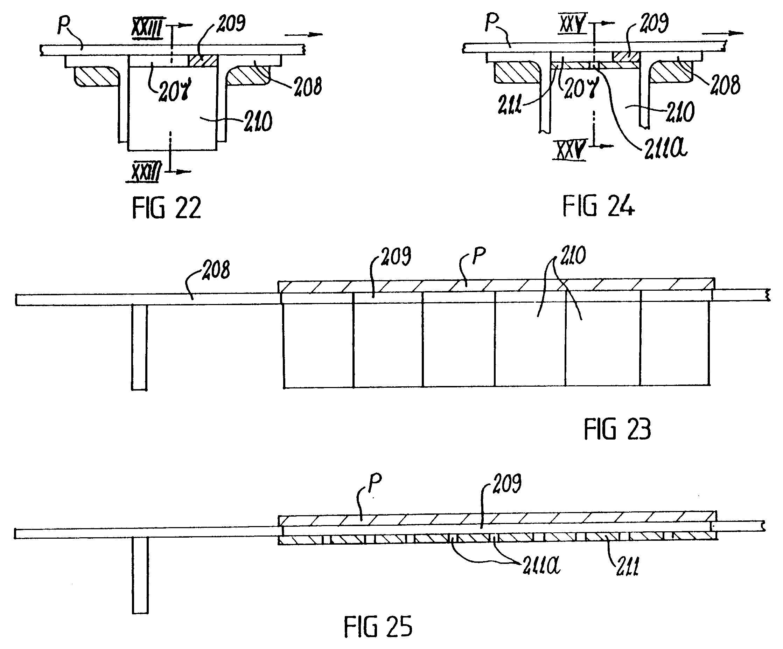

Assembly 104 assists in maintaining the correct relationship between electrodes 66 and plate P, while it also provides means for cooling plate P from its lower surface directly under unit 72. As shown in Figures 20 and 21, assembly 104 consists of a steel frame 108 supporting a series of hearth blocks 110 which extend transversely between side members 15. Blocks 110 are formed of copper or aluminium, and are cooled by water circulated therethrough via supply and return manifolds 112,113 and connecting hoses 114,116. Each block 110 is held against the lower surface of plate P by a respective pneumatic cylinder 115 supplied with air via supply and return manifolds 117,118 through hoses 119,120.

While a single water cooled hearth block can be used, a series of blocks as shown has the advantage of enabling relative movement between the individual ones of blocks 110. The series arrangement thus is able to accommodate transverse warping of plate P due to heating during electroslag operation, by adjustment permitted by cylinders 116; thereby maintaining cooling across the full width of the lower surface of plate P despite warping. Blocks 110 are accurately machined for good thermal contact.

Electrode holder and feeder assembly 64 includes a transverse beam structure secured to columns 60, and including header beam 122 with attached plate 123, and lower beam 124 with attached plate 125. For each electrode 66, there is a respective stepping motor 126, each of which has an output shaft connected to a threaded axially in-line shaft in a slotted conduit 128. The conduit for each motor is fixed to each of plates 123,125. Parallel to each conduit 128, there is a respective rod 130 of a holder 132 for each electrode. Each rod 130 is coupled to the output of a respective motor 126 by a pair of connectors 134 each of which extends through the slot of the respective conduit 128 and is in threaded engagement with the shaft therein. The arrangement is such that operation of each motor 126 causes rotation of the shaft in its conduit 128, resulting in connector 134 and, hence, the associated holder 132 and its electrode 66, to be raised or lowered.

At the lower end of rods 139, each holder 132 has an integral arm 136 which projects in the runout direction. Each electrode 66 is secured at the free end of the respective arm 136 so as to depend vertically above cavity 78 of trough 74 of assembly 70. The electrodes thus are able to be lowered individually, under the action of the respective motor 126, to bring the bottom end of each electrode into contact with, or to a required spacing from, plate P.

Rod 130 and arm 136 of each holder 132 defines a passage-way therethrough. Cooling water is able to be supplied from pipe 138, hose 140, manifold 142, supply and return hoses 144, return hose 146 and drain pipe 148, for cooling the entire length of holder 132.

Above manifold 142, busbars 150,151 are supported between columns 60, with electric power supply to busbars 150 passing to each electrode holder 132 via electric cables 152. Return of electric current is via assembly 154, located between columns 60, immediately below clamping roll 102.

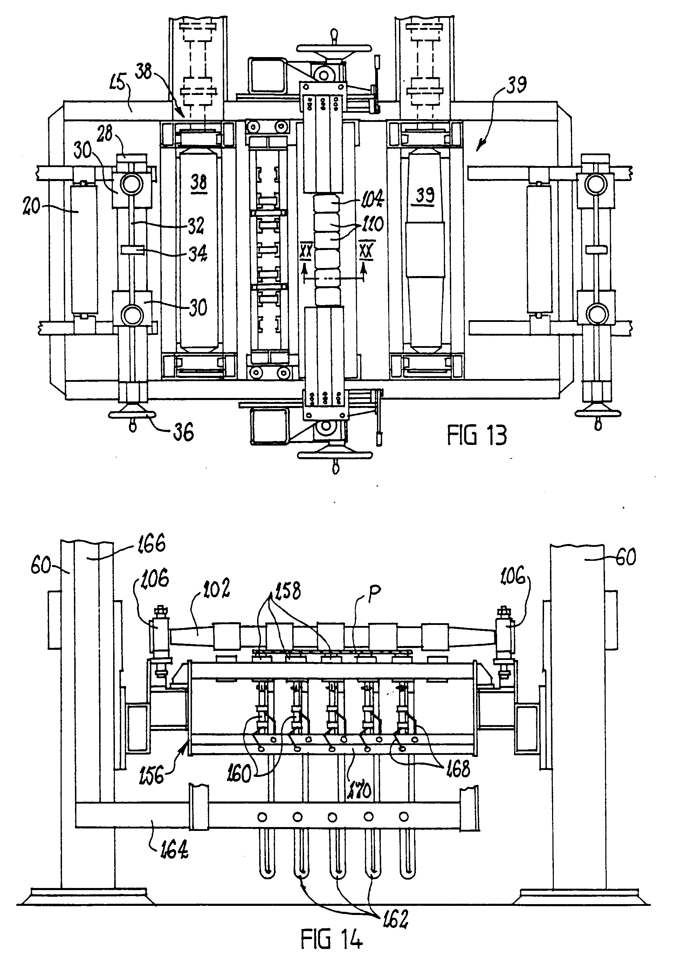

As shown in Figures 13 and 14, assembly 154 comprises a rectangular support frame 156 which carries a plurality of carbon brushes 158 each urged against the lower surface of plate P by a respective pneumatic cylinder 160. Electric cables 162 conduct the current from brushes 158 to busbar 164, from which it returns via busbar 166 to busbar 151. Flexible hoses 168 supply compressed air to cylinders 160 via manifold section 170 of frame 156; with section 170 receiving air from a suitable source.

Mounted between beams 122,124, there is a fume exhaust system 172. The latter is insulated by insulating panel 174, and comprises a box-like exhaust canopy 176 having an exhaust inlet 178 above trough 74, via which fume is extracted from above trough 74, under the action of exhaust fan 180, for discharge from installation S.

On the runout side of exhaust system 172, the above-mentioned flux supply assembly 68 extends above, and along the full length of, trough 74. Assembly 68 includes a flux hopper 184, from which flux is able to discharge along the length of wide-roll feeder 186 rotatable by motor 188. Below feeder 186, a metered flow of flux passes to feeder chute 190, and from the latter successively to top and bottom delivery chutes 192,194. A metered flow of flux is able to be charged to trough 74, as required, to maintain the necessary flux pool in trough 74.

Mounted on the runout side of plate feeder arrangement 39, there is provided a shield assembly 196. The latter extends along part of the length of table runout section R, above plate, to control slag release from the clad surface of plate P.

The electroslag surfacing machine 10 constitutes a facility for cladding the upper surface of flat steel plate P with a relatively thick layer of wear and/or corrosion resistant material. A unique characteristic is the at least semi-continuous full plate width surfacing of wide plate from 300 mm up to 1000 mm or more in the horizontal position in a single pass.

An electroslag pool (resistive heated by current flow between non-consumable graphite electrodes 66 and the plate P) is locally contained in a water-cooled mould 74 on the surface of the moving plate P.

The plate P, which preferably is precoated with the metered and consolidated mixture of alloy powders required to achieve the desired overlay chemical composition, is fed via entry-side feed rollers 42,44 through a clamping roll 102, over a water-cooled hearth block 110, so that the underside of the plate P, opposite the mould position, is cooled during the melting operation on the top surface. Melting of the alloy powder mixture is achieved by thermal energy transfer from the slag pool (typically at a temperature of the order of about 1600°C) to the alloy powder layer and to the upper-side of the plate.

The clad plate P exits the mould 74 under a quench bar of the latter which serves to solidify a thin layer of slag over the surface of the cladding, prior to the plate entering the power driven rollers 42a,44a at the runout end. Make-up flux is supplied to replenish the slag pool as required.

The machine frame supports the head of the machine consisting of the bank of graphite electrodes 66 (number, size and spacing determined by operating conditions) arranged vertically and spaced across the width of the plate P. The head comprises individual stepping-motor driven vertical slides to automatically control the electrode working distances above the plate surface. Following a start-up sequence to establish the full plate-width slag pool, the electrodes are regulated by a computer-controlled closed-loop system that monitors and automatically adjusts the current supplied through each electrode to preset running conditions.

The hearth block arrangement described above can result in too much heat being extracted from the lower surface of plate P. This can occur, for example, when plate P is relatively thin or where a relatively thick cladding layer is to be provided on plate P. An alternative hearth block arrangement therefore is illustrated schematically in Figures 22 and 23. A variant of that alternative is shown in Figures 24 and 25. In each case, parts corresponding to those of the apparatus of Figures 20 and 21 have the same reference numeral, plus 100.

In the arrangement of Figures 22 and 23, the hearth blocks 210 are mounted in support frame 208, although blocks 210 are spaced from the lower surface of plate P so as to define an air-space 207 therebetween. At the downstream side of hearth block assembly 204 in the feed direction for plate P, there is provided a layer 209 of graphite. Layer 209 is supported on blocks 210 and bears against the lower surface of plate P.

The thickness of layer 209 between blocks 210 and plate P, and its width in the feed direction for plate P, is chosen so as to achieve a suitable degree of cooling for a given plate P and a given thickness of cladding layer to be formed thereon. If the area of contact between layer 209 and plate P was too large, too much heat is removed from the plate and melting of the precoated layer of alloy powder is impaired. If the area of contact was too small, too little heat is removed from the plate and the plate cools at too slow a rate, leading to an undesirable microstructure in the cladding of the final product. A thickness of about 10 mm, and a width in the feed direction of about 30 mm, for layer 209 has been found to be useful in many instances. The length of layer 209 laterally of the feed direction is such that it extends at least across the full width of plate P. Layer 209 can be of a continuous length, or provided by a series of blocks, as shown, each supported by a respective hearth block 210.

In use of the arrangement of Figures 22 and 23, as distinct from that of Figures 20 and 21 in which blocks 110 directly contact plate P, a modification of the start-up procedure is desirable. This is because the area of plate P directly below electrodes 66 is not in contact with a cooling medium. In that modified start-up, a strip of metal, such as about 3 mm thick, is welded across the top surface of the leading end of plate P. The electrodes are lowered to contact the strip, rather than plate P directly, during start-up; the strip reducing the risk of burn-through occurring.

In use of the invention, heat input needs to be balanced by the heat output into the plate and the cooling systems provided in the flux mould arrangement and by the hearth block arrangement. Variation in depth of the molten slag pool can vary the heat lost to the cooling systems, and plate speed can vary the heat lost to and from the plate. A selected combination of heat input and plate speed can produce good electroslag operating conditions. However, a change in another parameter can occur, resulting in a loss of heat input/output balance and the need for corrective action. It therefore is desirable to monitor under-plate temperature to give an operator an immediate indication of heat balance, and to enable corrective action. Obviously, if that temperature steadily rises too much, the heat input is excessive and either plate speed should be increased or power input decreased. Conversely, if the temperature steadily falls too much, either plate speed should be decreased or power input increased. It is desirable that the plate temperature should vary, within limits, about some mean value, and be dependent only on local conditions such as flux additions.

In the arrangement of Figures 24 and 25, hearth blocks 210 are omitted. Layer 209 of graphite is retained by a baffle 211 which extends across and is mounted on frame 208 to define air space 207. Thus, cooling essentially is provided only by layer 209 and frame 208, although frame 208 can define a passage therearound for circulation of cooling water, if required. In baffle 211, there is a series of ports 211a spaced laterally with respect to the feed direction of plate P. A temperature sensor, such as a radiation pyrometer, can be provided at at least one of ports 211a, to measure the temperature of the under-surface of plate P.

If cooling of the under-surface of plate P is insufficient in the arrangement of Figures 24 and 25, due to the absence of blocks 210, such blocks can be provided. At least one temperature sensor could be incorporated in the blocks 210 in line with respective ports 211a. Also, of course, at least one temperature sensor could be incorporated in the hearth block assembly shown in Figures 20 and 21.

The output of the or each temperature sensor enables the operator to determine whether the cladding conditions are correct or not, obviating the need to rely on experience gained from previous runs. The under-plate temperature measurement allows the operator to determine the conditions at the time of cladding, if desirable with temperature being recorded with time. Both the heat balance, the variation of temperature with time, and temperature gradients across the plate can be measured, and action taken to bring these within preset limits.

Some form of oxidation protection for the under-surface of plate P is desirable to prevent excessive oxide build-up, delamination of oxide, and resultant variations in measured temperture. Viewing the under-surface of plate P through ports 211a of baffle 211 is one means of achieving such protection, as baffle 211 allows only limited ingress of oxygen to air space 207. The readings of under-surface temperature can be used to make adjustments to the operation in accordance with the invention, either manually or through a feed-back loop.

In use of the invention, start up conditions can be such that a molten slag pool is formed at one end of flux trough 74 before the flux is fully molten at the other end. If this occurs, the one end receives more power and becomes hotter. There is little tendency for lateral mixing of flux in the pool, and a resultant temperature gradient can remain for a considerable time as uniform power input will not rectify this. Instead, more power should be applied to the lower temperature end to equalize temperature along trough 74.

Our special case, involving such temperature gradient, tends to occur with the two end electrodes, i.e. the two laterally outermost electrodes with respect to the feed direction. Those end electrodes have a larger volume of flux to heat, plus greater heat loss through the end walls of trough 74. Unless this tendency is offset, edges of the plate can run cold and then will not be clad properly. One solution is to increase the power input to each end electrode, relative to the other electrodes, although this complicates power control requirements and electrode power supply. A preferred solution is to reduce heat loss by the slag pool to the end walls of trough 74 by insulating those end walls. It has been found that one or two layers of graphite, provided against those end walls to a total thickness of about 20 mm, is suitable for this purpose.

### General Description

The product is in the form of clad light-weight plate, 300 - 1000 mm wide with the combined overlay-substrate thickness in the range 6 mm to 22 mm. The clad plate consists of a weldable and relatively tough steel substrate with a very uniform layer of cladding on one side, which constitutes 20-50% of the thickness depending on the product requirements. The cladding is melted and fused onto the plate by the electroslag surfacing process, which yields a continuous, seam-free overlay across the full width of the plate. The composition of the surface layer may be varied to produce inter alia a hard wear resistant surface or a corrosion resistant surface. The composition of the surface layer is controlled by the mixture of powders pre-bonded to the plate surface and the amount of the top surface of the base plate melted during the process.

The resultant clad plate product falls into two categories: Type 1 involves minimal base plate melting, and also may be associated with incomplete melting of the cladding, whereby a densely sintered cladding layer results which is tenaciously bonded to the plate surface; and Type 2 uses a low melting point powder mixture which melts over the surface to form a brazed layer without any base plate melting.

### Specific Examples of Type 1 Product

- 1.: High chromium white cast iron formed by melting a mixture of high carbon ferrochrome powder, iron powder and carbon on the surface with about 0.5 - 1 mm melting of the base plate. This forms a wear resistant layer of iron-chromium carbides in austenite.
- 2.: A stainless steel overlay made by melting low carbon ferrochrome and iron powders on the surface, again with controlled base plate melting. This forms a corrosion and abrasion resistant stainless steel layer.

### Specific Examples of Type 2 Product

- 1.: Nickel or nickel-boron eutectic mixture is melted over the surface to form a corrosion resistant layer.
- 2.: A mixture of nickel and chromium boride is melted to form a wear resistant surface layer containing NiCrB particles.
- 3.: Tungsten carbide particles are bonded together using a low melting point alloy, such as NiB eutectic, to form a wear resistant surface layer.

### General

The process involves moving a light-gauge flat steel plate P, padded with a mixture of alloy powders on its top surface, at a controlled rate under a molten, electrically-heated slag pool over the full width of the plate. The heat from the slag pool melts the powders, and when required, some of the steel plate to form a liquid layer over the surface of the plate which progressively solidifies across the full plate width as the plate moves out from under the slag pool.

### Plate preparation

The powders required for the overlay are thoroughly mixed together, and then a binder such as a 10% solution PVA in water is added. Alternatively dry binders can be used. This slurry mixture is then spread over the surface of the steel plate and screeded to a prescribed thickness (typically 4 to 20 mm) using a straight edge running on edge strips of the required thickness as gauges. The padding with the water based binder must be dried at elevated temperature prior to use.

### Melting

The melting procedure involves passing the padded plate under a molten slag pool, contained in a water-cooled mould, with a water-cooled hearth under the plate to prevent through-thickness melting of the plate. The volume of the slag pool for 600 mm wide plate is 640 mm x 100 mm x 25 mm minimum slag pool depth. The process is dependent upon the heat flow into the plate from the slag pool, which is controlled by the temperature of the slag pool, the speed of the movement of the plate under the slag pool and the heat lost by the plate to the water-cooled hearth. There must be sufficient energy to melt the powders on the surface and when required to melt a superficial layer of the plate surface, but the heat flow must be balanced to avoid excessive melting of the plate. In practice the heat lost to the hearth is essentially constant, dependent mainly upon the hearth design. The temperature of the slag pool is varied by the current passing through it, and the plate speed is controlled by the speed of the drive roller.

The plate must be driven at a suitable speed for the current selected and alloy powders used (i.e. a lower melting point mixture requires less energy).

### Solidification

The liquid alloy on the plate surface is cooled by the plate passing between the quench bar incorporated in the water-cooled exit side of the mould and a cooling element incorporated in the exit side of the hearth. The principal chilling occurs in the heat extraction from the underside of the plate.

### Sealing of slag pool and slag loss

The quench bar also retains the slag in the slag pool, as a small gap (nominally 1 mm) exists between the underside of the mould and the overlay surface. A layer of liquid slag enters this gap to be chilled and solidified on the plate surface and exits from under the mould with the plate. Make-up flux from a flux feeder replenishes the molten slag pool. This process not only acts as a seal between the plate and the mould but the continual loss of slag and replenishment with new flux helps keep the slag composition constant, as the slag is broken down by the passage of the electric current through it.

### Control of Slag Pool Temperature

The slag pool typically consists of a pool of molten oxides and fluorides, which at temperature is electrically conductive. Graphite electrodes dip into the slag pool carrying current, which heats the molten slag on passing through it by resistive or Joule heating. The heat generated depends upon the current flowing and the voltage between the bottom of the electrode (the anode) and the plate surface (the cathode). These parameters are monitored and controlled by a computer system, which also has control over the output of the power supplies. Once the slag pool is molten the system is a closed loop with the computer controlling the electrode height or distance from the base plate via the stepping motor drives, to maintain constant current in each electrode. This individual control is required as some electrodes may burn down more quickly than others.

The basic sequence of the control system is that the computer sets the required preselected power from the DC power supplies. The electrodes move up or down to obtain a preset voltage between the bus-bar and the base plate with all the electrodes connected to a particular power supply moving simultaneously. Each individual electrode position is varied to equilibrate the current in each electrode.

This process varies the voltage measured as the load on the system changes so that all the electrodes are repositioned to give the preset voltage. This sequence of voltage adjust and current equalization continues throughout the complete run to maintain a constant heat source for the melting operation.

### The Start-up procedure

The process has been designed to start with powdered flux, using only the graphite electrodes to melt the flux and form a molten slag pool. The sequence has been set up under computer control and involves initial arcing, and then electroslag operation under each electrode.

### System Construction

The controller for the machine is based on two microcomputers, one called the Remote Data Unit (RDU) and the other the Main Control Computer (MCC). The RDU connects to current and voltage sensors, stepping motor drives, electrode position limit switches, external relays, operator pushbuttons and welding power supply controllers.

The MCC acts as a supervisor for the RDU and has interfaces to communicate with the RDU, display process data on a CRT screen, allow connection of a data terminal, accept commands from an in-built keypad and store data on floppy disk.

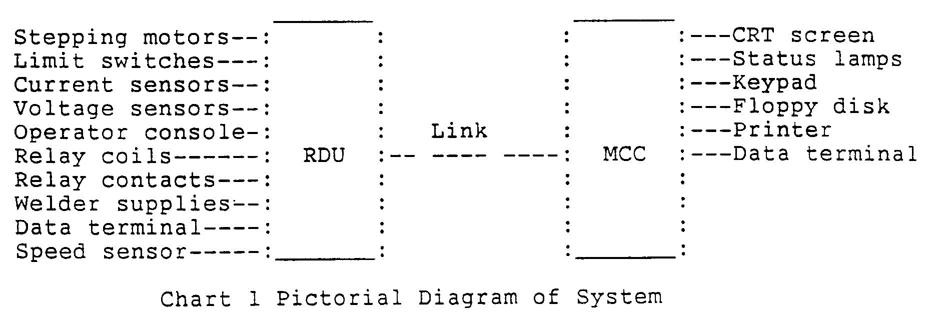

### System Functions

The PROGRAM which runs in the RDU causes it to periodically take readings from each of the current and voltage sensors and the plate speed transducer. It then writes these values into its MEMORY and proceeds to examine the values of the currents to determine whether they are within the required limits for each electrode. If corrections are required, the RDU then activates the appropriate motors in the direction to bring the currents back to the desired conditions.

The values which have been stored in MEMORY are now transmitted to the MCC for processing. To do this, the RDU signals the MCC asking if it is ready to accept data. If it is, both computers run a section of their respective PROGRAMS which cause the data to be copied from the RDU MEMORY to the MCC MEMORY. If the MCC was not ready for data, the RDU holds the data in its own MEMORY and proceeds with its tasks. When the next set of data is sent to the MCC, the previously omitted date is also transmitted.

In the time intervals between data collections, the RDU checks to see if there are any commands sent from a connected data terminal or from the MCC. If there are, these are acted upon without altering the precise timing of data collection cycles. In other words, data collection and motor control form the FOREGROUND tasks in the RDU and command processing is the BACKGROUND task performed when the computer has time to do it. The computer runs so fast that the operator cannot notice any delay in command execution.

When the MCC receives data as described above, it copies it into its own MEMORY. It then processes the data, examining the values for anything untoward, displaying on the CRT screen and recording on the floppy disk for later display on the printer. If it detects that some action is required by the RDU, it can send a signal to the RDU telling it what is required. The extreme example of this is if the MCC detects that a major fault has occurred or is about to occur, in which case the MCC may tell the RDU to shut down the welders and withdraw the electrodes.

The CRT display generated by the MCC is designed to be of maximum assistance to an operator running the machine. Electrode currents are shown in the form of a histogram to enable instant assessment of the relative values. Welder voltages, currents and power imputs are shown numerically as are both plate speed and distance travelled since the start of the run. A scrolling message window allows the MCC to notify the operator of any event requiring his attention.

### Commencement

When power is turned on, each computer automatically runs a small PROGRAM set in a permanent READ-ONLY MEMORY (ROM). This program sets all necessary variables to the correct starting values and sets all the chips which interact with external devices to their default states. The processes then differ in the two computers.

In the MCC, the main operating PROGRAMS for both the MCC and the RDU are held in FILES on the floppy disk. The next task for the MCC is to load the OPERATING SYSTEM PROGRAM into MEMORY and execute it. This OPERATING SYSTEM forms the basic unbrella PROGRAM under which all computer operations are carried out. The process of getting it to MEMORY from disk and executing it is called SYSTEM BOOT and is carried out automatically at this stage.

With the OPERATING SYSTEM established, another automatic process is invoked which causes the PROGRAMS for both the MCC and the RDU to be transferred to MEMORY in the MCC. Execution then begins at the start of the MCC program. The MCC causes a menu to be drawn on the screen which allows the operator to select from a range of currents. When the selection is made by way of the key-pad, the data disc is checked and a file opened if appropriate. The MCC then writes the display framework on the CRT screen and waits for instructions from the operator or the RDU.

The RDU meanwhile has been executing its own ROM program which causes it to look and see if the main program resides in memory at the instant. It will not find it there at power up because the MEMORY in which it sits is erased when the power is off. Since it cannot find the main program, the RDU next sends a signal to the MCC requesting it to transmit the main program to it. When it is ready (normally instantaneously) the MCC responds and both computers run sections of their PROGRAMS which cause the main program for the RDU to be copied from memory in the MCC to the proper place in the RDU. The veracity of this transmission is carefully checked at both ends and any errors are corrected automatically. When the RDU is satisfied with the program which is now in MEMORY, it starts execution at the start address and the machine is operational.

### Before Running

There are two main modes of operation of the machine called STARTUP and RUN modes. STARTUP is the process which initiates the molten slag pool under the electrodes while RUN mode is the state where plate is being passed under the pool and being coated with a clad layer.

STARTUP is part of the main program in the RDU. It is called into action by a pushbutton on the operator console. The process is wholly controlled by the RDU and runs at extremely high speed to allow instantaneous reaction of the computer to machine conditions. Before STARTUP is initiated, the operator must install paper flux excluders on two electrodes called the SECONDARY starting electrodes. The STARTUP process begins with the power supplies being programmed to low output levels by the RDU. The welder voltages are checked and the process aborted if they are below an acceptable level. All electrodes are then moved down at fast speed until they contact the plate. Contact is evidenced by current flow being detected in the individual electrodes and the motion of the respective electrode is stopped as soon as this condition is reached. All but two electrodes which are called the PRIMARY starting electrodes are then withdrawn a preset distance from the plate. Powdered flux is then fed into the mould enclosure for a set time, with the flux excluders preventing entry of flux to the area immediately below the secondary starting electrodes.

The primary starting electrodes are then raised slowly from the plate until their respective currents fall below an upper threshold level. During this interval, arcing occurs briefly which quickly melts the flux under the electrodes causing them to conduct in electroslag mode. After a time delay to allow molten pools to establish under the primary starting electrodes, input power is increased and the secondary starting electrodes are driven down to contact the plate. These are then withdrawn under the same conditions as the primary starting electrodes. The paper flux excluders burn away rapidly when the arcs are present and molten pools form under the secondary as well as the primary starting electrodes. As these small pools spread to other electrodes the computer senses their extent and increases power inputs accordingly until the full pool is established. Current levels are maintained between upper and lower limits for all conducting electrodes by electrode movement.

When all electrodes are conducting through the pool, the RDU signals the operator and the MCC so that the decision to switch over to RUN mode may be made by the operator when ready. The STARTUP process may be aborted at any time by the operator or it may be aborted by the RDU itself if it finds a dangerous situation developing.

In RUN mode, plate is driven through the machine and the RDU monitors the process and controls motors to maintain preset conditions. The MCC receives process data, displays it to the operator and records process variables on floppy disk.

### Design Considerations

The use of two computers ensures that accurately spaced data collection and disk storage can occur simultaneously. It also provides the opportunity for cross checking of operation and operator alert if one of the computers fails.

At any time after a run is complete, a paper copy of all data associated with that run may be obtained from a printer connected to the MCC. This may be in the form of graphs of variables with time or distance, or it may be requested as a numeric record of the variables with time. This will be useful for process fault diagnosis and could easily be used as a permanent quality control record.

## Claims

1. Apparatus for electroslag surfacing of metal plate, the apparatus comprising plate feeder means by which metal plate to be surfaced is moved longitudinally during an electroslag cladding operation, and a flux mould arrangement positioned to contain molten flux during a cladding operation so that molten flux is maintained on an upper surface of the metal plate as the latter moves below the mould arrangement, to enable electroslag cladding of the plate by a depending electrode having a lower end thereof fed to the mould arrangement; characterised in that a plate feeder assembly comprises the plate feeder means and includes an elongate, horizontally disposed feeder table (12) having an approach-end section (A) and a runout-end (R); in that an electroslag surfacing installation, including the flux mould arrangement, is operable to clad an upper surface of the metal plate (P) as it is conveyed along the plate feeder table (12), with the surfacing installation (15) being located intermediate said sections (A,R); the plate feeder assembly having conveying means (20,24,38,39), spaced along the feeder table (12), on which the metal plate (P) is conveyed in a feeding direction from the approach-end section (A) to, and beyond, the surfacing installation (15) so as to discharge from the surfacing installation along the run-out section (R); the flux mould arrangement (70) of the surfacing installation (S) being positioned to contain molten flux during a cladding operation so that a sufficient depth of flux is maintained on said upper surface for efficient electroslag cladding; the surfacing installation (S) further including an electrode holder and feeder assembly (64) which is spaced over the plate feeder assembly, above the mould arrangement (70), and which extends laterally of the plate feeder assembly relative to said feeding direction; the electrode holder and feeder assembly (64) being adapted to hold electrode means (66) and being connectable to a power source for the supply of electric power to said electrode means for an electroslag operation, the electrode holder and feeder assembly (64) being operable to adjust said electrode means (66) vertically such that, as metal plate (P) to be surfaced by a cladding operation is conveyed along the plate feeder assembly in said feeding direction, the electrode holder and feeder assembly (64) is operable:
- to lower the electrode means (66) into the mould arrangement (72) to bring a lower end of the electrode means (66) into contact with said upper surface of the metal plate (P) and establish current flow therebetween,
- then to raise the electrode means (66) to a height initiating conditions providing an arc between said lower end and upper surface, and
- with establishment of a molten slag pool in said mould arrangement (70) which submerges and extinguishes said arc, to retain said lower end of the electrode means (66) at an operating height above the upper surface sufficient to maintain efficient electroslag operation by conduction in said slag pool.

2. Apparatus according to Claim 1, further characterised in that the feeder table (12) comprises a horizontally disposed frame structure (15,16) supported on a base (118).

3. Apparatus according to Claim 2, further characterised in that said conveying means (20,24,42,42a) consists of a series of conveyor rollers (20,24,42,42a) which are rotatable on axes extending transversely with respect to the feed direction, the rollers of the series being spaced from each other in said direction, each roller having its ends journalled in a respective bearing block (22, 26,46,46a) adjacent a respective elongate side member (15) of said frame structure (15,16).

4. Apparatus according to Claim 3, further characterised in that said plate feeder assembly has drive means (38,39) by which the metal plate (P) is moved along the conveying means (20,24,42,42a) in said feed direction, at least one of said conveyor rollers (42,42a) forming part of said drive means (38,39) and being rotatable under the action of a drive motor (M,Ma) of said drive means.

5. Apparatus according to Claim 4, further characterised in that there is included biasing means (44,44a) operable to bear on the upper surface of the metal plate (P) to maintain said plate (P) in driving engagement with said at least one conveyor roller (42,42a).

6. Apparatus according to any one of Claims 1 to 3, further characterised in that the plate feeder assembly has drive means (38,39) by which the metal plate (P) is moved along the conveying means in the feed direction, and wherein the drive means (38,39) includes a transverse pair of vertically spaced feed rollers (42,44,42a,44a) between which the plate (P) passes in said feed direction and a drive motor (M,Ma) operable to drive at least one of the rollers (42,42a) of said pair.

7. Apparatus according to Claim 6, further characterised in that said pair of feed rollers (42,44,42a,44a) comprises a lower feed roller (42,42a) having each of its ends journalled in a respective one of bearings (46,46a) located at each side of the feeder table (12), and an upper feed roller (44,44a) having each of its ends located in, and adjustable along, a respective slide (49,49a), the upper roller (44,44a) being vertically adjustable in said slides (49,49a) to enable variation in clamping pressure exerted by the feed rollers (42,44,42a,44a) on said metal plate (P).

8. Apparatus according to Claim 7, further characterised in that said upper roller (44) has a sleeve (58) provided over its external surface, said sleeve being of resilient material.

9. Apparatus according to any one of Claims 1 to 8, further characterised in that there is a respective drive means (39,38) at each of the approach-end section (A) and the runout-end section (R) of the feeder table (12) such that the metal plate (P) is fed positively to the surfacing installation (15) for cladding and clad plate is fed positively away from said installation (5), each said drive means (39,38) including a transverse pair of vertically spaced feed rollers (42a,44a,42,44) between which the plate (P) passes in said feed direction and a drive motor (Ma,M) operable to drive at least one of the rollers of said pair (42a,42), and wherein said pair of feed rollers (42a,44a,42,44) of each said drive means (39,38) comprises a lower feed roller (42a,42) having each of its ends journalled in a respective one of bearings (46a,46) located at each side of the feeder table (12), and an upper feed roller (44a,44) having each of its ends located in, and adjustable along, a respective slide (49a,49), the upper roller being (44a,44) vertically adjustable in said slides (49a,49) to enable variation in clamping pressure exerted by the feed rollers (42a,44a,42,44) on said metal plate (P).

10. Apparatus according to Claim 9, further characterised in that the upper roller (44) of the drive means (38) at the runout-end section (R) of the feeder table (12) is mounted so as to be able to float vertically through a distance sufficient to accommodate undulations in the metal plate (P) caused by the electroslag operation.

11. Apparatus according to any one of Claims 1 to 10, further characterised in that there is included at least one centering means (28) operable to engage side edges of the metal plate (P) and to constrain the plate (P) against lateral movement as it is conveyed in said feeding direction.

12. Apparatus according to Claim 11, further characterised in that said at least one centering means (28) includes a pair of blocks (30) spaced laterally with respect to the feeding direction and between which the metal plate (P) is conveyed, each block (30) being screw-engaged with a respective end of a rod (32) journalled in bearings (34) mounted on the feeder table, the rod (32) being rotatable to move said blocks (30) laterally in unison and to adjust the spacing therebetween to accommodate metal plate (P) of different widths.

13. Apparatus according to any one of Claims 1 to 12, further characterised in that said mould arrangement (70) extends laterally with respect to the feeding direction across substantially the full operating width of the plate feeder table (12), and wherein said mould arrangement (70) comprises a peripheral wall bounding (72,74) a mould cavity (78) which has an open top and bottom, at least a major portion of the bottom of the mould (72) being substantially closed by the metal plate (P) during a cladding operation so as to retain a molten slag pool therein.

14. Apparatus according to Claim 13, further characterised in that there is included a respective shoe (88) adjacent each side of the plate feeder table (12), each shoe (88) being located under a respective end portion of the mould arrangement (70) for closing a region of the bottom of the mould (72) at said end portion, each shoe (88) being resiliently urged by biasing means so as to seal against a side edge of the metal plate (P).

15. Apparatus according to Claim 13 or Claim 14, further characterised in that the peripheral wall (74) comprising said mould arrangement defines a passage (80) therearound, said peripheral wall (74) being adapted for connection to a source of cooling water for circulation of cooling water through said passage (80).

16. Apparatus according to any one of Claims 1 to 15, further characterised in that said electrode holder and feeder assembly (64) is adapted to hold electrode means comprising a plurality of electrodes (66), such that said electrodes (66) are in laterally spaced relationship across at least part of the lateral extent of the plate feeder assembly.

17. Apparatus according to Claim 16, further characterised in that said electrode holder and feeder assembly (64) includes a header structure (122) mounted above and extending transversely across the feeder table (12) in vertically spaced relation thereto, and a respective electrode holder (132) for each electrode (66), each electrode holder (132) being mounted in relation to the header structure (122) by a respective electrode feeder means (126,128) operable to move its electrode holder (132) vertically, relative to the header structure (122), towards and away from the feeder table (12).

18. Apparatus according to Claim 17, further characterised in that each electrode feeder (126,128) means comprises an actuator (126) which is mounted between the header structure (122) and the respective electrode holder (132) and is operable to provide reversible linear drive by which its electrode holder (132) is vertically movable.

19. Apparatus according to Claim 18, further characterised in that each said actuator (126) comprises a reversible stepping motor, and wherein each motor has an output shaft coupled to a respective upwardly extending rod (130) having a helical thread, with each electrode holder (132) having a shaft parallel to the rod (130), a toothed bracket (134) on the shaft meshing with the thread of rod (130) such that, as the rod (130) is rotated on actuation of its motor (126), the bracket (134), shaft and electrode (132) holder is drawn along the rod (130).

20. Apparatus according to any one of Claims 17 to 19, further characterised in that said electrode holder and feeder assembly (64) includes at least one busbar (150,151) by which it is connectable to the power source for a supply of electric power to said electrodes (66), at least one busbar (150,151) being electrically connected to the holder (132) for each electrode (66) by a respective cable (152) for each holder, each cable (152) being of a length accommodating vertical movement of its holder (132) under the action of the respective electrode feeder means (126,128).

21. Apparatus according to Claim 20, further characterised in that there is included electrical contact brushes (158) positioned on said plate feeder assembly for contacting the metal plate (P) from below, said contact brushes (158) providing part of a return path for current generated by said power source during electroslag operation.

22. Apparatus according to any of Claims 1 to 21, further characterised in that the surfacing installation (5) further includes a hearth block arrangement (110) mounted below the mould arrangement (70), the hearth block arrangement (110) being positioned to engage the metal plate (P) from below so as to maintain the metal plate (P) in relation to the mould arrangement (70) and to provide means for cooling the plate (P).

23. Apparatus according to Claim 22, further characterised in that the surfacing installation further includes clamping means (102) operable to apply a downwards force on the upper surface of the metal plate (P), the clamping means cooperating with the hearth block arrangement (70) to maintain the metal plate (P) in relation to the flux mould arrangement (70), the clamping means being a freely rotatable clamping roll (102) which extends laterally with respect to the feed direction, the clamping roll having each of its ends journalled in respective bearing in respective spring loaded bearing housing (106), and wherein the hearth block arrangement (110) is secured between opposed sides of the plate feeder assembly, and is adapted for water cooling to enhance cooling of the plate (P) from below.

24. Apparatus according to Claim 22 or 23, further characterised in that said hearth block arrangement (110) is urged upwardly, so as to bear against the metal plate (P) from below, under the action of urging means (115) comprising pneumatic or hydraulic cylinders, and wherein said hearth block (110) arrangement comprises a plurality of cooling blocks (115) arranged in series between opposed sides of the plate feeder assembly, said urging means (115) being operable to urge each said cooling block (110) such that each cooling block (110) is individually urged upwardly.

25. Apparatus according to any one of Claims 1 to 24, further characterised in that there is included a flux feeder arrangement (68) located above, and adapted to supply flux to, the flux mould arrangement (70), wherein said flux feeder arrangement (68) is located adjacent the electrode holder and feeder arrangement (64), and is operable to supply flux to the flux mould arrangement (70) over substantially the full lateral extent of the flux mould arrangement (70)

26. Apparatus according to Claim 25, further characterised in that the flux feeder arrangement (68) has a flux feeder roll (186), a flux hopper (184) on the intake side of the feeder roll (186) for the supply of flux to the feeder roll (186), and a distribution chute (192,194) for conducting flux received from the feeder roll (186) into the flux mould arrangement (70).

27. Apparatus according to any one of Claims 1 to 26, further characterised in that there is included a metal powder feeder arrangement located above, and adapted to supply metal powder to, the flux mould arrangement (70), wherein the powder feeder arrangement is located adjacent the electrode holder and feeder arrangement (64), and is operable to supply powder to the flux mould arrangement (70) over substantially the full lateral extent of the flux mould arrangement.

28. Apparatus according to Claim 27, further characterised in that the powder feeder arrangement has a powder feeder roll, a powder hopper on the intake side of the feeder roll for the supply of powder to the feeder roll, and a distribution chute for conducting powder received from the feeder roll into the flux mould arrangement (70).

29. Apparatus according to any one of Claims 1 to 28, further characterised in that there is included control means operable to monitor or monitor and regulate each of the conveying of metal plate (P) along said feeder table (112), electric power supplied to the electrode means (66) by said power source and operation of said electrode holder and feeder assembly (64) to adjust said electrode (66) means vertically.

30. A method of electroslag surfacing of metal plate, in which the plate is moved relative to a flux mould arrangement to enable electroslag cladding of an upper surface of the plate by means of a depending electrode having a lower end thereof fed to the mould arrangement, characterised in that said method comprises the steps of:
(a) presenting the plate (P) to a plate feeder assembly including an elongate, horizontally disposed feeder table (12) having an approach-end section (A) and a runout-end section (R).
(b) conveying the plate (P), with a major surface thereof uppermost, along said feeder table (12) in a feeding direction from said approach-end section (A) to said runout-end section (R), and
(c) subjecting said plate (P) to an electroslag operation at a surfacing installation (S) located intermediate said sections (A,R) of the feeder table (12) to provide a cladding metal layer on said uppermost surface, said operation comprising:
(i) passing the metal plate (P), at said surfacing installation (S), under a flux mould arrangement (70) and under an electrode holder and feeder assembly (64) having depending electrode means (66) vertically in line with the interior of the mould arrangement (70);
(ii) operating said electrode holder and feeder assembly (64) to lower the electrode means (66) into the mould arrangement (70) to bring a lower end of the electrode means (66) into contact with said upper surface and to establish current flow between the electrode means (66) and said metal plate (P), under the action of electric power supplied to the electrode means (66) by a power source in a circuit completed by said metal plate (P);
(iii) operating said electrode holder and feeder assembly (64), on establishing said current flow, to raise the electrode means (66) to a height initiating an arc between the lower end of the electrode means (66) and said uppermost surface;
(iv) on establishing said arc, charging flux to mould arrangement (70) and melting the flux therein to establish a molten slag pool which overlies said uppermost surface and which submerges and extinguishes said arc; and
(v) supplying metal alloy powder material to said mould arrangement (70), while said electrode holder and feeding arrangement is controlled to retain the lower end of the electrode means (66) at an operating height above the uppermost surface to maintain efficient electroslag operation by conduction in said slag pool, said metal alloy material being provided at the interface between the slag pool and the uppermost surface and melted in said mould arrangement (70) to clad said uppermost surface as the metal plate (P) is conveyed under the mould arrangement.

31. A method according to Claim 30, further characterised in that said metal alloy material is provided as a metered and consolidated mixture of alloy powder precoated on said major surface prior to the metal plate (P) being presented to the plate feeder assembly.

32. A method according to Claim 30 or Claim 31, further characterised in that said plate (P) is conveyed to said surfacing installation (S) under the action of a first transverse pair of vertically spaced feed rollers (42a,44a) located at said approach-end section (A) of the plate (P) feeder assembly, the plate being passed in said feed direction between said rollers (42a,44a) under the action of a drive motor (Ma) operating to drive at least one of the rollers of said first pair.

33. A method according to any one of Claims 30 to 32, further characterised in that said plate (P) is conveyed from said surfacing installation (S) under the action of a second transverse pair of vertically spaced rollers (42,44) located at said runout-end section (R) of the plate feeder assembly, the plate (P) being passed in the feed direction between said rollers (42,44) of said second pair under the action of a drive motor (M) operating to drive at least one of the rollers of said second pair.

34. A method according to any one of Claims 30 to 33, further characterised in that said plate (P) is constrained at side edges thereof against movement laterally with respect to said feed direction as it is conveyed along said feeder table.

35. A method according to any one of Claims 30 to 34, further characterised in that said plate (P) passes under said flux mould arrangement (70) such that the upper surface of said plate (P) substantially closes an open bottom of said flux mould arrangement (70) and at least partially retains said molten slag pool in said flux mould arrangement (70).

36. A method according to Claim 35, further characterised in that a respective shoe (88) adjacent each side of the plate feeder assembly is biased to seal against a side edge of the plate (P) as the latter passes under the flux mould arrangement (70), the plate (P) and said shoes (88) together substantially fully closing said open bottom to retain said molten slag pool in said flux mould arrangement (70), coolant being circulated through a peripheral wall defining said flux mould arrangement (70).

37. A method according to any one of Claims 30 to 36, further characterised in that said electrode means (66) comprises a plurality of elongate electrodes (66), each of said electrodes being held by a respective electrode holder (132) having an associated respective electrode feeder means (126,128), said electrodes (66) being disposed vertically in an array spaced laterally with respect to said feed direction, each electrode feeder means (126,128) being individually operated to bring the lower end of its electrode (66) into contact with said metal plate (P) to establish said current flow, to raise its electrode to said operating height to initiate said arc, and to retain the lower end of its electrode at said spacing to maintain said electroslag operation.

38. A method according to any one of Claims 30 to 37, further characterised in that said plate (P) is maintained in relation to the bottom of said flux mould arrangement (70) by means of a hearth block arrangement (110) which bears against the plate (P) from below, the hearth block arrangement (110) providing cooling of the plate (P), coolant being circulated through said hearth block arrangement (110) and regulating the extent of cooling of said plate (P), said hearth block arrangement (110) optionally being urged upwardly so as to bear against the plate (P) from below.

39. A method according to any one of Claims 30 to 38, further characterised in that the conveying of said plate (P) along said feeder table (12), the supply of electric power to the electrode means (66) and operation of the electrode holder and feeder assembly (64) to adjust said electrode means (66) vertically is monitored or monitored and regulated during said electroslag operation so as to maintain a required level of efficiency of said operation.

## Patentansprüche

1. Vorrichtung zur Elektroschlackenoberflächenhearbeitung von Metallblech, mit einer Blechzufuhreinrichtung mittels derer Metallblech, dessen Oberfläche zu bearbeiten ist, in Längsrichtung während eines Elektroschlackenüberzugsverfahrens bewegt wird, und einer Flussmittelformanordnung, welche so angeordnet ist, dass sie während dem Ueberzugsverfahren geschmolzenes Flussmittel enthalten kann, so dass geschmolzenes Flussmittel auf einer oberen Fläche des Metallblechs gehalten wird, wenn dieses sich unter die Formanordnung bewegt, um so die Elektroschlackenbeschichtung des Blechs durch eine herabhängende Elektrode, deren unteres Ende der Formanordnung zugeführt wird, zu ermöglichen; dadurch gekennzeichnet, dass die Blechzufuhranordnung aus einer Blechzufuhreinrichtung besteht und einen länglichen, horizontal angeordneten Zufuhrtisch (12), mit einem Anlaufendeabschnitt (A) und einem Auslaufendabschnitt (R), umfasst; dass eine Eletroschlackenoberflächenbearbeitungsanlage, welche die Flussmittelformanordnung umfasst, betreibbar ist, um eine obere Fläche des Metallsblechs (P) zu beschichten, wenn es entlang des Blechzufuhrtisches (12) bewegt wird, wobei die Oberflächenbearbeitungsanlage (15) sich zwischen den Abschnitten (A,R) befindet; dass die Blechzufuhranordnung eine Transporteinrichtung (20,24,38,39) hat, welche entlang des Zufuhrtisches (12) in Abstand angeordnet ist, auf welcher das Metallblech (P) in Zufuhrrichtung von dem Anlaufendeabschnitt (A) zur Oberflächenbearbeitungsanlage (15) und weiter bewegt wird, um so aus der Oberflächenbearbeitungsanlage entlang des Auslaufabendeschnittes (R) herauszutreten; dass die Flussmittelformanordnung (70) der Oberflächenbearbeitungsanlage (S) angeordnet ist, um während des Beschichtungsvorganges geschmolzenes Flussmittel zu enthalten, so dass eine ausreichende Tiefe des Flussmittels auf der oberen Fläche zur wirksamen Elektroschlackenbeschichtung eingehalten wird; dass die Oberflächenbearbeitungsanlage (S) desweitern einen Elektrodenhalter- und eine Zufuhranordnung (64), welche in Abstand über der Blechzufuhranordnung, oberhalb der Formanordnung (70) angeordnet ist und, welche sich seitlich der Blechzufuhranordnung bezüglich der Zufuhrrichtung erstreckt, wobei die Elektrodenhalter- und Zufuhranordnung (64) ausgelegt ist, um ein Elektrodenmittel (66) zu halten und an eine Leistungsquelle anschliessbar ist, um dem Elektrodenmittel elektrische Leistung für den Elektroschlackenbeschichtungsvorgang zuzuführen, und die Elektrodenhalter- und Zufuhranordnung (64) betreibbar ist, um das Elektrodenmittel (66) in senkrechter Richtung einzustellen, so dass dann, wenn das Metallblech (P), dessen Oberfläche durch ein Beschichtungsvorgang zu bearbeiten ist, entlang der Blechzufuhranordnung in Zufuhrrichtung bewegt wird, dass die Elektrodenhalter- und Zufuhranordnung (64) betreibbar ist:
- um das Elektrodenmittel (66) in die Formanordnung (72) abzusenken, um eine unteres Ende des Elektrodenmittels (66) mit der oberen Fläche des Metallblechs (P) in Berührung zu bringen und einen Stromfluss dazwischen herzustellen;
- um dann das Elektrodenmittel (66) bis zu einer Höhe anzuheben, welche Bedingungen einleitet, die einen Bogen zwischen dem unteren Ende und der oberen Fläche bewirken, und
- um mit der Errichtung eines geschmolzenen Schlackenbades, welches den Bogen überschwemmt und löscht, das untere Ende des Elektrodenmittels (66) in einer Betriebshöhe über der oberen Fläche zu halten, welche ausreicht, um einen wirksamen Elektroschlackenüberzugvorgang durch Leitung in dem Schlackenbad aufrechtzuerhalten.

2. Vorrichtung nach Anspruch 1, dadurch gekennzeichnet, dass der Zufuhrtisch (12) eine horizontal angeordnete Rahmenstruktur (15,16) umfasst, welche auf einer Basis (118) aufliegt.

3. Vorrichtung nach Anspruch 2, dadurch gekennzeichnet, dass die Transporteinrichtung (20,24,42,42a) aus einer Reihe von Transportrollen (20,24,42,42a) besteht, welche auf Axen drehbar sind, welche sich quer zur Zufuhrrichtung erstrecken, wobei die Rollen dieser Rollenreihe in Abstand voneinander in Zufuhrrichtung angeordnet sind, und jede Rolle mit ihren Enden in einem zugehörigen Lagerblock (22,26,46,46a) neben einem jeweiligen länglichen Seitenelement (15) der Rahmenstruktur (15,16) gelagert ist.

4. Vorrichtung nach Anspruch 3, dadurch gekennzeichnet, dass die Blechzufuhranordnung eine Antriebsvorrichtung (38,39) hat, mit welcher die Blechplatte (P) entlang der Transportvorrichtung (20,24,42,42a) in Zufuhrrichtung bewegt wird, wobei mindestens eine der Transportrollen (42,42a) Teil der Antriebseinrichtung (38,39) ist, und unter der Wirkung eines Antriebsmotors (M, Ma) der Antriebsvorrichtung drehbar ist.

5. Vorrichtung nach Anspruch 4, dadurch gekennzeichnet, dass sie eine Vorspanneinrichtung (44,44a) aufweist, welche betreibbar ist, um auf der oberen Fläche des Metallblechs (P) aufzuliegen und das Blech (P) in antreibender Berührung mit der wenigstens einen Antriebsrolle (42,42a) zu halten.

6. Vorrichtung nach einem der Ansprüche 1 bis 3, dadurch gekennzeichnet, dass die Blechzufuhranordnung eine Antriebseinrichtung (38,39) hat, mit welcher das Metallblech (P) entlang der Transporteinrichtung in Zufuhrrichtung bewegt wird, und in welcher die Antriebseinrichtung (38,39) ein quer angeordnetes Paar von senkrecht in Abstand voneinander angeordneten Zufuhrrollen (42,44,42a,44a) zwischen denen das Blech (P) in Zufuhrrichtung hindurch geht, aufweist, sowie einen Antriebsmotor (M,Ma), welcher zum Antreiben der mindestens einen Rolle (42,42a) des Paares betreibbar ist.

7. Vorrichtung nach Anspruch 6, dadurch gekennzeichnet, dass das Paar Zufuhrrollen (42,44,42a,44a) eine untere Zufuhrrolle (42,42a) deren jeweiligen Enden in je einem von Lagern (46,46a) gelagert ist, welche an jeder Seite des Zufuhrtisches (12) angeordnet sind, und eine obere Zufuhrrolle (44,44a) hat, deren jeweiligen Enden in einem entsprechenden Gleitstück (49,49a) gelagert und entlang diesem beweglich ist, wobei die obere Rolle (44,44a) senkrecht in den Gleitstücken (49,49a) einstellbar ist, um eine Aenderung des Klemmdruckes, welcher von den Zufuhrrollen (42,44,42a,44a) auf das Metallblech (P) ausgeübt werden soll, zu ermöglichen.

8. Vorrichtung nach Anspruch 7, dadurch gekennzeichnet, dass eine Hülse (58) über der Aussenfläche der oberen Rolle (44) vorgesehen ist, wobei die Hülse aus einem nachgiebigen Material ist.

9. Vorrichtung nach einem der Ansprüche 1 bis 8, dadurch gekennzeichnet, dass eine jeweilige Antriebsvorrichtung (39,38) jeweils im Anlaufendeabschnitt (A) und Auslaufendeabschnitt (R) des Zufuhrtisches (12) so vorgesehen ist, dass das Metallblech (P) wirksam der Oberflächenbehandlungsanlage (15) zur Beschichtung zugeführt wird und das beschichtete Blech wirksam aus der Oberflächenbehandlungsanlage (5) herausgeführt wird, wobei jede Antriebsvorrichtung (39,38) ein quer angeordnetes Paar senkrecht in Abstand angeordnete Zufuhrrollen (42a,44a,42,44), zwischen denen das Blech (P) in Zufuhrrichtung hindurchgeht, aufweist, sowie einen Antriebsmotor (Ma,M), welcher betreibbar ist, um wenigstens eine der Rollen der Paares (42a,42) anzutreiben, und bei welcher das Antriebsrollenpaar (42a,44a,42,44) jeder Antriebseinrichtung (39,38) eine untere Zufuhrrolle (42a,42), deren Enden in einem jeweiligen Lager von Lagern (46a,46) gelagert ist, welche an jeder Seite des Zufuhrtisches (12) angeordnet sind, umfasst, sowie eine obere Zufuhrrolle (44a,44), deren Enden in einem jeweiligen Gleitstück (49a,49) angeordnet und entlang desselben einstellbar sind, wobei die obere Rolle (44a,44) senkrecht in den Gleitstücken (49a,49) einstellbar ist, um eine Aenderung des Klemmdruckes, welcher durch die Zufuhrrollen (42a,44a,42,44) auf das Metallblech (P) ausgeübt wird, zu ermöglichen.

10. Vorrichtung nach Anspruch 9, dadurch gekennzeichnet, dass die obere Rolle (44) der Antriebseinrichtung (38) am Auslaufendeabschnitt (R) des Zufuhrtisches (12) montiert ist, damit sie senkrecht über eine Distanz schwimmen kann, welche ausreicht, um Welligkeiten in der Blechplatte (P), welche durch den Elektroschlackenbeschichtungsvorgang bewirkt werden, auszugleichen.

11. Vorrichtung nach einem der Ansprüche 1 bis 10, dadurch gekennzeichnet, dass mindestens eine Zentriereinrichtung (28) vorgesehen ist, welche betreibbar ist, um die Seitenkanten des Metallblechs (P) zu berühren und das Blech (P) an seitlichen Bewegungen zu hindern, wenn es in Zufuhrrichtung transportiert wird.

12. Vorrichtung nach Anspruch 11, dadurch gekennzeichnet, dass die mindestens eine Zentriervorrichtung (28) ein Paar Blöcke (30) hat, welche in Abstand quer zur Zufuhrrichtung angeordnet sind und zwischen denen das Metallblech (P) transportiert wird, wobei jeder Block (30) über eine Schraubverbindung mit einem jeweiligen Ende einer Stange (32), welche in Lagern (34), die auf den Zufuhrtisch montiert sind, gelagert ist, verbunden ist, wobei die Stange (32) drehbar ist, um die Blöcke (30) im Gleichtakt in Querrichtung zu bewegen und den Abstand dazwischen einzustellen, um Metallbleche (P) verschiedener Breite aufzunehmen.

13. Vorrichtung nach einem der Ansprüche 1 bis 12, dadurch gekennzeichnet, dass die Formanordnung (70) sich seitlich bezüglich der Zufuhrrichtung im wesentlichen über die volle Betriebsbreite des Blechzufuhrtisches (12) erstreckt, und bei welcher die Formanordnung (70) aus einer Umfangswand (72,74), welche einen Formhohlraum (78) begrenzt, welcher oben offen ist, und einen Boden hat, wobei wenigstens ein Hauptteil des Bodens der Form (72) während des Beschichtungsvorganges durch das Metallblech (P) im wesentlichen verschlossen ist, um so das geschmolzene Schlackenbad darin zurückzubehalten.

14. Vorrichtung nach Anspruch 13, dadurch gekennzeichnet, dass an jeder Seite des Blechzufuhrtisches (12) ein entsprechender Schuh (88) vorgesehen ist, wobei jeder Schuh (88) unter einem entsprechenden Endteil der Formanordnung angeordnet ist, um einen Bereich des Bodens der Form (72) an dem Endteil zu verschliessen, wobei jeder Schuh (88) nachgiebig durch Vorspannmittel angepresst wird, um so gegen die Seitenkante des Metallblechs dicht anzuliegen.

15. Vorrichtung nach Anspruch 13 oder 14, dadurch gekennzeichnet, dass die Umfangswand (74) der Formanordnung einen Durchgang (80) drum herum begrenzt, wobei die Umfangswand (74) ausgelegt ist, um mit einer Kühlwasserquelle verbunden zu werden, um Kühlwasser durch den Durchgang (80) fliessen zu lassen.

16. Vorrichtung nach einem der Ansprüche 1 bis 15, dadurch gekennzeichnet, dass die Elektrodenhalter- und Zufuhranordung (64) ausgelegt ist, um Elektrodenmittel zu halten, welche aus einer Vielzahl von Elektroden (66) bestehen, so dass die Elektroden (66) in Querrichtung in Abstand voneinander quer zu mindestens einem Teil der Querausdehnung der Blechzufuhranordnung angeordnet sind.

17. Vorrichtung nach Anspruch 16, dadurch gekennzeichnet, dass die Elektrodenhalter- und Zufuhranordnung (64) eine Kopfstruktur (122) hat, welche oberhalb des Zufuhrtisches (12) in Abstand zu diesem und sich quer zu demselben erstreckend angeordnet ist, und einen entsprechenden Elektrodenhalter (132) für jede Elektrode (66) aufweist, wobei jeder Elektrodenhalter (132) bezüglich der Kopfstruktur (122) mit Hilfe einer jeweiligen Elektrodenzufuhranordnung (126,128) montiert ist, welche betreibbar ist, um ihren Elektrodenhalter (132) senkrecht bezüglich der Kopfstruktur (122) auf den Zufuhrtisch (12) zu und von diesem weg zu bewegen.

18. Vorrichtung nach Anspruch 17, dadurch gekennzeichnet, dass jede Elektrodenzufuhreinrichtung (126,128) ein Betätiger (126) hat, welcher zwischen der Kopfstruktur (122) und dem jeweiligen Elektrodenhalter (132) montiert ist und betreibbar ist, um eine umkehrbaren linearen Antrieb bereitzustellen, durch den ihr Elektrodenhalter (132) senkrecht bewegbar ist.

19. Vorrichtung nach Anspruch 18, dadurch gekennzeichnet, dass jeder Betätiger (126) einen reversierbaren Schrittmotor enthält, und bei dem jeder Motor eine Ausgangswelle hat, welche mit einer jeweiligen sich nach oben erstreckenden Stange (130) mit Spiralgewinde verbunden ist, wobei jeder Elektrodenhalter (134) eine Welle parallel zur Stange (130) hat und ein Zahnkasten (134) auf der Welle mit dem Gewinde auf der Stange (130) im Eingriff ist, so dass, beim Drehen der Stange (130) durch Betätigung ihres Motors (126), der Zahnkasten (134) die Welle und der Elektrodenhalter (132) entlang der Stange (130) gezogen werden.

20. Vorrichtung nach einem der Ansprüche 17 bis 19, dadurch gekennzeichnet, dass die Eletrodenhalter- und Zufuhranordnung (64) mindestens eine Stromschiene (150,151) hat, über die sie mit der Leistungsquelle verbindbar ist, um den Elektroden (66) elektrische Leistung zuzuführen, wobei mindestens eine Stromschiene (150,151) mit dem Halter (132) für jede Elektrode (66) elektrisch mittels eines jeweiligen Kabels (152) für jeden Halter elektrisch verbindbar ist, wobei jedes Kabel (152) eine Länge hat, welche an die Vertikalbewegung seines Halters (132) unter der Wirkung der jeweiligen Elektrodenzufuhreinrichtung (126,128) angepasst ist.

21. Vorrichtung nach Anspruch 20, dadurch gekennzeichnet, dass elektrische Kontaktbürsten (158) vorgesehen sind, welche auf der Blechzufuhranordnung angeordnet sind, um mit dem Metallblech (P) von unten in Berührung zu kommen, wobei die Kontaktbürsten (158) einen Teil eines Rückpfades für den von der Leistungsquelle erzeugten Strom während des Elektroschlackeüberzugsvorganges bereitstellen.

22. Vorrichtung nach einem der Ansprüche 1 bis 21, dadurch gekennzeichnet, dass die Oberflächenbehandlungsanlage (5) eine unter der Formanordnung (70) montierte Herdsohlenanordnung (110) aufweist, wobei die Herdsohlenanordnung (110) angeordnet ist, um das Metallblech (P) von unten zu berühren, um so das Metallblech (P) bezüglich der Formanordnung (70) zu halten und so ein Mittel zum Kühlen des Bleches (P) bereitszustellen.

23. Vorrichtung nach Anspruch 22, dadurch gekennzeichnet, dass die Oberflächenbearbeitungsanlage desweitern eine Klemmeinrichtung (102) hat, welche betreibbar ist, um eine nach unten gerichtete Kraft auf die obere Fläche des Metallblechs (P) ausüben, wobei die Klemmeinrichtung mit der Herdsohlenanordnung (70) zusammenwirkt, um das Metallblech (P) bezüglich der Flussmittelformanordnung (70) zu halten, wobei die Klemmeinrichtung eine frei drehbare Klemmrolle (102) ist, welche sich seitlich bezüglich der Zufuhrrichtung erstreckt, wobei die Klemmrolle jedes ihrer Enden in einem jeweiligen Lager in einem jeweiligen federbelasteten Lagergehäuse (106) gelagert ist, und bei welcher die Herdsohlenaordnung (110) zwischen gegenüberliegenden Seiten der Blechzufuhranordnung festgemacht und zur Wasserkühlung ausgelegt ist, um die Kühlung des Blechs (P) von unten zu verbessern.

24. Vorrichtung nach Anspruch 22 oder 23, dadurch gekennzeichnet, dass die Herdsohlenanordnung (110) nach oben gedrückt wird, um so gegen das Metallblech (P) von unten anzuliegen, unter der Wirkung von einer Andrückeinrichtung (115) mit pneumatische oder hydraulische Zylinder, und bei welcher die Herdsohlenanordnung (110) aus einer Vielzahl von Kühlblöcken (110) besteht, welche in Reihe zwischen gegenüberliegenden Seiten der Blechzufuhranordnung angeordnet sind, wobei die Andrückeinrichtung (115) betreibbar ist, um jeden der Kühlblöcke (110) anzudrücken, so dass jeder Kühlblock (110) individuell nach oben gedrückt wird.

25. Vorrichtung nach einem der Ansprüche 1 bis 24, dadurch gekennzeichnet, dass eine oberhalb der Flussmittelformanordnung (70) angeordnete Flussmittelzuführanordnung (68) vorgesehen ist, um dieser Flussmittel zuzuführen, die Flussmittelzufuhranordnung (68) neben der Elektrodenhalter- und Zufuhranordnung (64) angeordnet ist und betreibbar ist, um der Flussmittelformanordnung (70) das Flussmittel über im wesentlichen die gesamte seitliche Ausdehnung der Flussmittelformanordnung (70) zuzuführen.

26. Vorrichtung nach Anspruch 25, dadurch gekennzeichnet, dass die Flussmittelzufuhranordnung (68) eine Flussmittelzufuhrrolle (186), einen Flussmitteltrichter (184) auf der Eingangsseite der Zufuhrrolle (186) für die Zufuhr des Flussmittels zur Zufuhrrolle (186), und eine Verteilungsrutsche (192,194) um das von der Zufuhrrolle (186) erhaltenen Flussmittels in die Flussmittelanordnung (70) zu leiten, aufweist.

27. Vorrichtung nach einem der Ansprüche 1 bis 26, dadurch gekennzeichnet, dass eine oberhalb der Flussmittelzufuhranordnung (70) angeordnete Metallpulverzufuhranordnung vorgesehen ist, die ausgelegt ist, um ihr Metallpulver zuzuführen, die Pulverzufuhranordnung neben der Elektrodenhalter- und Zufuhranordnung (64) angeordnet ist und betreibbar ist, um der Flussmittelformanordnung (70) Pulver über im wesentlichen die gesamte seitliche Ausdehnung der Flussmittelformanordnung zuzuführen.

28. Vorrichtung nach Anspruch 27, dadurch gekennzeichnet, dass die Pulverzufuhranordnung eine Pulverzufuhrrolle, ein Pulvertrichter auf der Eingangsseite der Zufuhrrolle für die Zuführung des Pulvers zur Zufuhrrolle, und eine Verteilungsrutsche um das von der Zufuhrrolle erhaltenen Pulvers in die Flussmittelformanordnung (70) zu leiten, hat.

29. Vorrichtung nach einem der Ansprüche 1 bis 28, dadurch gekennzeichnet, dass eine Steuereinrichtung vorgesehen ist, welche betreibbar ist, um den Transport des Metallblechs entlang des Zufuhrtisches (12), die der Elektrodeneinrichtung (66) von der Leistungsquelle zugeführte elektrische Leistung und den Betrieb der Elektrodenhalter- und Zufuhranordnung (64) zum senkrechten Einstellen der Elektrodenmittel (66) zu überwachen oder zu überwachen und zu steuern.

30. Verfahren zur Elektroschlackenoberflächenbehandlung von Metallblech, bei welchem das Blech bezüglich einer Flussmittelformanordnung bewegt wird, um die Elektroschlackenbeschichtung auf einer oberen Fläche des Blechs mit Hilfe einer herabhängenden Elektrode, deren unteres Ende der Formanordnung zugeführt wird, zu ermöglichen, dadurch gekennzeichnet, dass das Verfahren aus den folgenden Schritten besteht:
(a) Heranbringen des Bleches (P) an eine Blechzufuhranordnung mit einem länglichen, horizontal angeordneten Zufuhrtisch (12) mit einem Anlaufendeabschnitt (A) und einem Auslaufendeabschnitt (R),
(b) Transportieren des Bleches (P), mit einer Hauptfläche desselben nach oben gerichtet, entlang des Zufuhrtisches (12) in einer Zufuhrrichtung von dem Anlaufendeabschnitt (A) zum Auslaufendeabschnitt (B), und
(c) Aussetzen des Bleches (P) einem Elektroschlackenbeschichtungsvorgang in einer Oberflächenbeschichtungsanlage (S), welche zwischen den Abschnitten (A,R) des Zufuhrtisches (12) angeordnet ist, um eine Metallüberzugsschicht auf der obersten Fläche bereitzustellen, wobei der Vorgang umfasst:
(i) Hindurchbringen des Metallbleches, in der Oberflächenbeschichtungsanlage (S), unter einer Flussmittelformanordnung (70) und unter einer Elektrodenhalter- und Zufuhranordnung (64) mit herabhängenden Elektrodenmitteln (66), welche senkrecht ausgerichtet mit dem Innern der Formanordnung (70) sind;
(ii) Betreiben der Elektrodenhalter- und Zufuhranordnung (64), um die Elektrodenmittel (66) in die Formanordnung (70) herabzulassen, um ein unteres Ende der Elektrodenmittel (66) in Berührung mit der oberen Fläche zu bringen und einen Stromfluss zwischen den Elektrodenmitteln (66) und dem Metallblech, unter der Wirkung elektrischer Leistung, welche der Elektrodenanordnung (66) durch eine Leistungsquelle in einem von dem Metallblech (P) geschlossenen Stromkreis herzustellen;
(iii) Betreiben der Elektrodenhalter- und Zufuhranordnung (64), nach dem Herstellen des Stromflusses, um die Elektrodenanordnung (66) bis zu einer Höhe anheben, welche einen Bogen zwischen dem unteren Ende der Elektrodenmittel (66) und der oberen Fläche entstehen lässt;
(iv) beim Einsetzen des Bogens, Laden eines Flussmittels in die Formanordnung (70) und Schmelzen des Flussmittels in derselben, um ein geschmolzenes Schlackebad herzustellen, welches auf der oberen Fläche liegt und den Bogen überschwemmt und löscht; und
(v) Zuführen von Metallegierungspulvermaterial zu der Formanordnung (70), während die Elektrodenhalter- und Zufuhranordnung gesteuert wird, um das untere Ende der Elektrodenmittel (66) auf einer Betriebshöhe über der oberen Fläche zu behalten, um einen wirksamen Elektroschlackenüberzugsvorgang durch Leitung in dem Schlackenbad aufrechtzuerhalten, wobei das Metallegierungsmaterial an der Grenzschicht zwischen dem Schlackenbad und der oberen Fläche bereitgestellt und in der Formanordnung (70) geschmolzen wird, um die obere Fläche zu beschichten, wenn das Metallblech (P) unter der Formanordnung hindurchtransportiert wird.

31. Verfahren nach Anspruch 30, dadurch gekennzeichnet, dass das Metallegierungsmaterial als eine zugemessene und verdichtete Mischung von Legierungspulver bereitgestellt wird, welches auf der Hauptfläche voraufgetragen ist, bevor das Metallblech (P) der Blechzufuhranordnung zugeführt wird.

32. Verfahren nach Anspruch 30 oder 31, dadurch gekennzeichnet, dass das Blech der Oberflächenbeschichtungsanlage (S) unter der Wirkung eines ersten quer angeordneten Paares senkrecht in Abstand voneinander, in dem Anlaufendeabschnitt (A) der Blechzufuhranordnung angeordneten Rollen (42a,44a) zugeführt wird, wobei das Blech in Zufuhrrichtung zwischen den Rohren (42a,44a) hindurchgeführt unter der Wirkung eines Antriebsmotors (Ma) wird, welcher betrieben wird, um wenigstens eine der Rollen des ersten Paares anzutreiben.

33. Verfahren nach einem der Ansprüche 30 bis 32, dadurch gekennzeichnet, dass das Blech von der Oberflächenbeschichtungsanlage (S) unter der Wirkung eines zweiten quer angeordneten Paares senkrecht (42,44), welche in Abstand voneinander in dem Auslaufendeabschnitt (R) der Blechzufuhranordnung angeordneten Rollen (42,44) weitergeführt wird, wobei das Blech (P) in Zufuhrrichtung zwischen den Rohren (42,44) des zweiten Paares unter der Wirkung eines Antriebsmotors (M) hindurchläuft, welcher betrieben wird, um wenigstens eine der Rollen des zweiten Paares anzutreiben.

34. Verfahren nach einem der Ansprüche 30 bis 33, dadurch gekennzeichnet, dass das Blech (P) an seinen Seitenkanten gegen seitliche Bewegung bezüglich der Zufuhrrichtung geführt wird, wenn es entlang des Zufuhrtisches transportiert wird.

35. Verfahren nach einem der Ansprüche 30 bis 34, dadurch gekennzeichnet, dass das Blech (P) unter der Flussmittelformanordnung (70) hindurchläuft, so dass die obere Fläche des Bleches (P) einen offenen Boden der Flussmittelformanordnung (70) im wesentlichen verschliesst und mindestens zum Teil das geschmolzene Schlackenbad in der Flussmittelformanordnung (70) zurückhält.

36. Verfahren nach Anspruch 35, dadurch gekennzeichnet, dass jeweils ein Schuh (88) neben jeder Seite der Blechzufuhranordnung vorgespannt ist, um gegen die Seitenkante des Bleches (P) abzudichten, während das Blech unter der Flussmittelformanordnung (70) hindurchläuft, wobei das Blech (P) und die Schuhe (88) miteinander den offenen Boden im wesentlichen vollständig schliessen, um das geschmolzene Schlackenbad in der Flussmittelformanordnung zurückzubehalten, wobei ein Kühlmittel durch eine Umfangswand, welche die Flussmittelformanordnung (70) begrenzt, zirkuliert wird.

37. Verfahren nach einem der Ansprüche 30 bis 36, dadurch gekennzeichnet, dass die Elektrodenmittel (66) eine Vielzahl von länglichen Elektroden (66) umfasst, wobei jede der Elektroden in einem jeweiligen Elektrodenhalter (132) mit einer zugeordneten jeweiligen Elektrodenzufuhreinrichtung (126,128) gehalten wird, wobei die Elektroden (66) senkrecht in einer Anordnung mit seilichem Abstand voneinander bezüglich der Zufuhrrichtung angeordnet sind, wobei jede Elektrodenzufuhreinrichtung (126,128) individuell betreibbar ist, um das untere Ende seiner Elektrode (66) mit dem Metallblech (P) in Berührung zu bringen und den Stromfluss herzustellen, um seine Elektrode bis auf Betriebshöhe anzuheben, um den Bogen zu starten, und um das untere Ende seiner Elektrode bei jenem Abstand zu halten, der den Elektroschlackenbeschichtungsvorgang aufrechterhält.

38. Verfahren nach einem der Ansprüche 30 bis 37, dadurch gekennzeichnet, dass das Blech (P) bezüglich des Bodens der Flussmittelformanordnung (70) mit Hilfe eines Herdsohlenanordnung (110) gehalten wird, welche gegen das Blech (P) von unten anliegt, wobei die Herdsohlenaordnung (110) die Kühlung des Bleches (P) bereitstellt, ein Kühlmittel durch die Herdsohlenanordnung (110) zirkuliert und die Grösse der Kühlung des Bleches (P) geregelt wird, wobei die Herdsohlenanordnung (110) wahlweise nach oben gedrückt wird, um so gegen das Blech (P) von unten anzuliegen.

39. Verfahren nach einem der Ansprüche 30 bis 38, dadurch gekennzeichnet, dass das Transportieren des Bleches (P) entlang der Zufuhrtisches (12), die Zufuhr elektrischer Leistung zu den Elektrodenmitteln (66) und der Betrieb der Elektrodenhalter- und Zufuhranordnung (64) zum senkrechten einzustellen der Elektrodenmittel während des Elektroschlackenbeschichtungsvorgangs, überwacht oder überwacht und gesteuert wird, um so ein gefordertes Niveau der Wirksamkeit des Betriebes aufrechtzuerhalten.

## Revendications

1. Appareil pour le surfaçage sous laitier électroconducteur d'une tôle métallique, appareil comprenant un moyen d'alimentation de tôle à l'aide duquel la tôle métallique, dont la surface doit être traitée est déplacée longitudinalement pendant une opération de revêtement sous laitier électroconducteur, et un arrangement de moule pour fondant positionné pour contenir du fondant fondu pendant une opération de revêtement de sorte que le fondant fondu est maintenu sur une surface supérieure de la tôle métallique, quand celle-ci se déplace sous l'arrangement de moule, pour permettre le revêtement sous laitier électroconducteur de la tôle à l'aide d'une électrode suspendue ayant une extrémité intérieure avancée dans l'arrangement de moule, caractérisé en ce qu'un assemblage d'alimentation de tôle est formé par le moyen d'alimentation de tôle et comprend une table d'alimentation (12) allongée, disposée horizontalement, ayant une section (A) d'extrémité d'approche et une section (R) d'extrémité de sortie; qu'une installation de surfaçage sous laitier électroconducteur, comprenant l'arrangement de moule pour fondant, fonctionne pour revêtir une surface supérieure de la tôle métallique (P), quand celle-ci est transportée le long de la table d'alimentation de tôle (12), l'installation de surfaçage (15) étant disposée entre lesdites sections (A.R); l'assemblage d'alimentation de tôle ayant des moyens transporteurs (24,38,39), espacés le long de la table d'alimentation (12), sur lesquels la tôle métallique (P) est transportée en direction d'alimentation à partir de la section (A) d'extrémité d'approche vers et au-delà de l'installation de surfaçage (15) de sorte à sortir de l'installation de surfaçage le long de la section (R) de sortie; l'arrangement de moule pour fondant (70) de l'installation de surfaçage (S) étant positionné de sorte à contenir du fondant fondu pendant une opération de revêtement de sorte qu'une profondeur suffisante de fondant est maintenue sur la surface supérieure pour un revêtement efficace sous laitier électroconducteur; l'installation de surfaçage (S) comprenant en outre un assemblage de support et d'alimentation d'électrodes qui est espacé au-dessus de l'assemblage d'alimentation de tôle, au-dessus de l'arrangement de moule (70), et qui s'étend latéralement de l'assemblage d'alimentation de tôle par rapport à ladite direction d'alimentation; l'assemblage (64) de support et d'alimentation d'électrodes étant adapté pour tenir des moyens d'électrodes (66) et pouvant être connecté à une source de puissance pour l'alimentation de puissance électrique vers les moyens d'électrodes pour une opération sous laitier électroconducteur, l'assemblage (64) de support et d'alimentation d'électrodes fonctionnant pour ajuster les moyens d'électrodes (66) en direction verticale de sorte que, quand la tôle métallique (P), dont la surface doit être traitée par une opération de revêtement, est transportée le long de l'assemblage d'alimentation de tôle dans ladite direction d'alimentation, l'assemblage (64) de support et d'alimentation d'électrodes fonctionne:
- pour abaisser les moyens d'électrodes (66) dans l'arrangement de moule (72) pour mettre une extrémité inférieure des moyens d'électrodes (66) en contact avec ladite surface supérieure de la tôle métallique (P) et établir un courant circulant entreeux,
- de soulever alors les moyens d'électrodes (66) jusqu'à une hauteur initiant des conditions réalisant un arc entre ladite extrémité inférieure et ladite surface supérieure, et
- avec l'établissement d'un bain de laitier fondu dans ledit arrangement de moule (70) qui submerge et éteint ledit arc, pour retenir ladite extrémité inférieure des moyens d'électrodes (66) à une hauteur opérationnelle au-dessus de la surface supérieure qui est suffisante pour maintenir une opération efficace sous laitier électroconducteur par conduction dans ledit bain de laitier.

2. Appareil selon la revendication 1, caractérisé en outre en ce que la table d'alimentation (12) comprend une structure de cadre (15,16) disposée horizontalement et portée sur une base (118).

3. Appareil selon la revendication 2, caractérisé en outre en ce que le moyen transporteur (20,24,42,42a) sont constitués par une série de rouleaux transporteurs (20,24,42,42a) qui peuvent tourner sur des axes s étendant transversalement par rapport à la direction d'alimentation, les rouleaux de ladite série étant espacés l'un de l'autre dans ladite direction, chaque rouleau ayant ses extrémités logées dans un bloc de palier (22,26,46,46a) adjacent à un élément latéral (15), allongé, respectif, de ladite structure de cadre (15,16).

4. Appareil selon la revendication 3, caractérisé en outre en ce que l'assemblage d'alimentation de tôle a un moyen moteur (38,39) à l'aide duquel la tôle métallique (P) est déplacée le long des moyens transporteurs (20,24,42,42a) dans ladite direction d'alimentation, au moins un desdits rouleaux transporteurs (42,42a) formant une partie dudit moyen moteur (38,39) et pouvant tourner sous l'action d'un moteur d'entraînement (M,Ma) dans ledit moyen moteur.

5. Appareil selon la revendication 4, caractérisé en outre en ce qu'un moyen de précontrainte (44,44a) est prévue fonctionnant pour s'appuyer sur la surface supérieure de la tôle métallique (P) pour maintenir ladite tôle (P) en engagement d'entraînement avec ledit au moins un rouleau transporteur (42,42a).

6. Appareil selon une des revendications 1 à 3, caractérisé en outre en ce que l'assemblage d'alimentation de tôle a un moyen moteur (38,39) à l'aide de duquel la tôle métallique (P) est déplacée le long d'un moyen transporteur dans la direction d'alimentation, et dans lequel ledit moyen moteur (38,39) comprend une paire de rouleaux d'alimentation (42,44,42a,44a) transversaux, espacés verticalement, entre lesquels la tôle (P) passe dans ladite direction d'alimentation et que le moyen moteur (M,Ma) fonctionne pour entraîner au moins un des rouleaux (42,42a) de ladite paire.

7. Appareil selon la revendication 6, caractérisé en outre en ce que ladite paire de rouleaux d'alimentation (42,44,42a,44a) comprend un rouleau d'alimentation inférieur (42,42a) ayant chacune de ses extrémités logée dans un palier respectif de palier (46,46a) se trouvant de chaque côté de la table d'alimentation (12), et un rouleau d'alimentation supérieur (44,44a) ayant chacune de ses extrémités logée dans et ajustable le long d'une coulisse (49,49a) respective, le rouleau supérieur (44,44a) étant ajustable en direction verticale dans lesdites coulisses (49,49a) pour permettre de varier la pression de serrage exercée par les rouleaux d'alimentation (42,44,42a,44a) sur ladite tôle métallique (P).

8. Appareil selon la revendication 7, caractérisé en outre en ce qu'une douille (58) est prévue sur sa surface extérieure dudit rouleau supérieur (44), ladite douille étant formée d'une matière élastique.

9. Appareil selon une des revendications 1 à 8, caractérisé en outre en ce qu'un moyen moteur (39,38) respectif est prévu à chacune des sections d'extrémité d'approche (A) et d'extrémité de sortie (R) de la table d'alimentation (12) de sorte que la tôle métallique (P) est alimentée positivement vers l'installation de surfaçage (15) pour la revêtir, et que la tôle revêtue est ensuite déplacée positivement en s'éloignant de ladite installation de surfaçage (5), chacun desdits moyens (39,38) comprenant une paire transversale de rouleaux d'alimentation (42a,44a,42,44) espacés verticalement entre lesquels ladite tôle (P) passe dans ladite direction d'alimentation et un moyen moteur (Ma,M) fonctionnant pour entraîner au moins un des rouleaux de ladite paire (42a,42), et dans lequel ladite paire de rouleaux d'alimentation (42a,44a,42,44) de chacun des moyens moteur (39,38) comprend un rouleau d'alimentation inférieur (42a,42) ayant chacune des ses extrémités logée dans un palier respectif de paliers (46a,46) disposés de chaque côté de ladite table d'alimentation (12), et un rouleau d'alimentation supérieur (44a,44) ayant chacune de ses extrémités logée dans et ajustable le long d'une coulisse respective (49a,49), le rouleau supérieur (44a,44) étant ajustable en direction verticale dans lesdites coulisses (49a,49) pour permettre de varier la pression de serrage exercée par les rouleaux d'alimentation (42a,44a,42,44) sur ladite tôle métallique (P).

10. Appareil selon la revendication 9, caractérisé en outre en ce que le rouleau supérieur (44) du moyen moteur (38) à la section (R) d'extrémité de sortie de la table d'alimentation (12) est monté de sorte à pouvoir flotter verticalement sur une distance suffisante pour l'adapter aux ondulations de la tôle métallique (P) causées par l'opération sous laitier électroconducteur.

11. Appareil selon une des revendications 1 à 10, caractérisé en outre en ce qu'au moins un moyen de centrage (28) est prévu fonctionnant pour contacter les bords latéraux de la tôle métallique (P) et pour empêcher que la tôle (P) exécute un mouvement latéral, quand elle est transportée dans ladite direction d'alimentation.

12. Appareil selon la revendication 11, caractérisé en outre en ce que ledit au moins un moyen de centrage (38) comprend une paire de blocs (30), espacés en direction latérale par rapport à la direction d'alimentation, entre lesquels ladite tôle métallique est transportée, chaque bloc (30) étant mis en contact par vissage avec une extrémité respective d'une tige (32) logée dans des paliers (34) montés sur la table d'alimentation, la tige (32) pouvant tourner pour déplacer lesdits blocs (30) en direction latérale en unisson et pour ajuster la distance entre-eux pour recevoir de la tôle métallique (P) de largeurs différentes.

13. Appareil selon une des revendications 1 à 12, caractérisé en outre en ce que ledit arrangement de moule (70) s'étend latéralement par rapport à la direction d'alimentation sur substantiellement la largeur totale d'opération de la table d'alimentation de tôle (12), et dans lequel ledit arrangement de moule (70) comprend une paroi périphérique (72,74) délimitant une cavité de moule (78) qui est ouverte vers le haut et a un fond, au moins une partie majeure du fond du moule (72) étant substantiellement fermée par la tôle métallique (P) pendant l'opération de revêtement de sorte à retenir le bain de laitier fondu dans ladite cavité.

14. Appareil selon la revendication 13, caractérisé en outre en ce qu'il comprend un sabot (88) respectif adjacent à chaque côté de la table d'alimentation de tôle (12), chaque sabot (88) étant placé sous une partie terminale respective de l'arrangement de moule (70) pour fermer une région du fond du moule (72) à cette partie terminale, chaque sabot (88) étant forcé de façon élastique par un moyen de contrainte de sorte à faire un joint contre le bord latéral de la tôle métallique (P).

15. Appareil selon la revendication 13 ou 14, caractérisé en outre en ce que la paroi périphérique (74) formant ledit arrangement de moule définit un passage (80) autour dudit arrangement, ladite paroi périphérique (74) étant adaptée pour être connectée à une source d'eau de refroidissement pour circuler l'eau de refroidissement à travers ledit passage (80).

16. Appareil selon une des revendications 1 à 15, caractérisé en outre en ce que ledit assemblage de support et d'alimentation d'électrodes (64) est adapté pour supporter ledit moyen d'électrodes comprenant une pluralité d'électrodes (66), de sorte que lesdites électrodes (66) sont espacées en direction latérale l'une par rapport à l'autre sur au moins une partie de l'extension latérale dudit assemblage d'alimentation de tôle.

17. Appareil selon la revendication 14, caractérisé en outre en ce que ledit assemblage de support et d'alimentation d'électrodes (64) comprend une structure de tête (122) montée au-dessus de et s'étendant transversalement à la table d'alimentation (12) par rapport à laquelle elles sont espacées verticalement, et un support d'électrode (132) respectif pour chaque électrode (66), chaque support d'électrode (132) étant monté par rapport à ladite structure de tête (192) par un moyen d'alimentation d'électrode (126,128) respectif fonctionnant pour déplacer son support d'électrode (132) verticalement par rapport à ladite structure de tête (122) pour l'approcher et l'éloigner de ladite table d'alimentation (12).

18. Appareil selon la revendication 17, caractérisé en outre en ce que chaque moyen de support d'électrode (126,128) comprend un actionneur (126) qui est monté entre la structure de tête (122) et le support d'électrode respectif (132) et qui fonctionne pour fournir un entraînement linéaire réversible au moyen duquel son support d'électrode (132) est mobile en direction verticale.

19. Appareil selon la revendication 18, caractérisé en outre en ce que chaque actionneur (126) comprend un moteur à pas réversible, et dans lequel chaque moteur a un arbre de sortie couplé à une tige respective (130) s'étendant vers le haut et ayant un pas de vis hélicoïdal, chaque support d'électrode (132) ayant un arbre parallèle à la tige (130), une patte dentée (134) sur ledit arbre s'engageant dans ledit pas de vis sur la tige (130) de sorte que, lorsque la tige (130) est tournée par mise en marche de son moteur (126), la patte (134), l'arbre et le support d'électrode (132) sont tirés le long de la tige (130).

20. Appareil selon une des revendications 17 à 19, caractérisé en outre en ce que ledit assemblage de support et d'alimentation d'électrodes (64) comprend au moins une barre collectrice (150,151) au moyen de laquelle l'assemblage peut être connecté à la source de puissance pour l'alimentation de puissance électrique vers lesdites électrodes (66), au moins une barre collectrice (150,151) étant connectée électriquement au support (132) pour chaque électrode (66) par un câble (152) respectif pour chaque support, chaque câble (152) ayant une longueur correspondant au mouvement verticale de son support (132) sous l'action des moyens d'alimentation d'électrode (126,128) respectifs.

21. Appareil selon la revendication 20, caractérisé en outre en ce qu'il comprend des balais de contact électrique (158) placés sur ledit assemblage d'alimentation de tôle pour contacter la tôle métallique (54) d'en bas, les balais de contact (158) fournissant une partie d'un chemin de retour pour le courant produit par ladite source de puissance pendant l'opération sous laitier électroconducteur.

22. Appareil selon une des revendications 1 à 21, caractérisé en outre en ce que l'installation de surfaçage (5) comprend en outre un arrangement de sole de four (110) monté sous l'arrangement de moule (70), l'arrangement de sole de four (110) étant positionné pour contacter la tôle métallique (P) d'en bas de sorte à maintenir la tôle métallique (P) par rapport à l'arrangement de moule (70) et pour fournir un moyen pour refroidir la tôle (P).

23. Appareil selon la revendication 22, caractérisé en outre en ce que l'installation de surfaçage comprend en outre des moyens de serrage (102) fonctionnant pour appliquer une force dirigée vers le bas sur la surface supérieure de la tôle métallique (P), le moyen de serrage coopérant avec l'arrangement de sole de four (70) pour maintenir la tôle métallique (50) en rapport avec l'arrangement de moule de flux (70), le moyen de serrage étant un rouleau de serrage (102) tournant librement qui s'étend latéralement par rapport à la direction d'alimentation, le rouleau de serrage ayant chacune de ses extrémités logée dans un palier respectif dans des boîtiers (106) de palier respectifs à serrage par ressort, et dans lequel l'arrangement de sole de four (110) est maintenu entre des côtés opposés de l'assemblage d'alimentation de tôle, et est adapté pour le refroidissement à l'eau pour améliorer le refroidissement de la tôle (P) d'en bas.

24. Appareil selon la revendication 22 ou 23, caractérisé en outre en ce que ledit arrangement de sole de four (110) est forcé vers le haut de sorte à s'appuyer contre la tôle métallique (P) d'en bas sous l'action d'un moyen de pression (115) comprenant des cylindres pneumatiques ou hydrauliques, et dans lequel ledit arrangement de sole de four (110) comprend une pluralité de blocs de refroidissement (115) arrangés en série entre des côtés opposés de l'assemblage d'alimentation de tôle, ledit moyen de pression (115) fonctionnant pour forcer chaque bloc de refroidissement (115) vers le haut de sorte que chaque bloc de refroidissement (110) est forcé individuellement vers le haut.

25. Appareil selon une des revendications 1 à 24, caractérisé en outre en ce qu'il comprend un arrangement d'alimentation de fondant (68) placé au-dessus de et est adapté pour alimenter du fondant dans ledit arrangement de moule de fondant (70), dans lequel ledit arrangement d'alimentation de fondant (68) se trouve adjacent à l'arrangement de support et d'alimentation d'électrodes (64), et fonctionne pour alimenter le fondant vers l'arrangement de moule de fondant (70) sur substantiellement l'étendue latérale totale de l'arrangement de moule de fondant (70).

26. Appareil selon la revendication 25, caractérisé en outre en ce que l'arrangement d'alimentation de fondant (68) a un rouleau d'alimentation de fondant (186), un cône d'alimentation de fondant (186) sur le côté entrée du rouleau d'alimentation (186) pour l'alimentation du fondant sur le rouleau d'alimentation (186), et une chute de distribution (192,194) pour conduire le fondant reçu du rouleau d'alimentation (186) dans l'arrangement de moule de fondant (70).

27. Appareil selon une des revendications 1 à 26, caractérisé en outre en ce qu'il comprend un arrangement d'alimentation de poudre métallique se trouvant au-dessus de et adapté pour fournir de la poudre métallique vers l'arrangement de moule de fondant (70), dans lequel l'arrangement d'alimentation de poudre se trouve adjacent à l'arrangement de support et d'alimentation d'électrodes (64) et fonctionne pour alimenter la poudre dans l'arrangement de moule de fondant (70) sur substantiellement l'étendue latérale totale de l'arrangement de moule de fondant.

28. Appareil selon la revendication 27, caractérisé en outre en ce que l'arrangement d'alimentation de poudre a un rouleau d'alimentation de poudre, un cône d'alimentation de poudre sur le côté d'entrée du rouleau d'alimentation pour l'alimentation de poudre sur le rouleau d'alimentation, et une chute de distribution pour conduire la poudre reçue du rouleau d'alimentation dans l'arrangement de moule de fondant (70).

29. Appareil selon une des revendications 1 à 28, caractérisé en outre en ce qu'il comprend un moyen de contrôle qui fonctionne pour surveiller ou surveiller et régler chacune le transport de tôle métallique (P) le long de la table d'alimentation (12), la puissance électrique fournie au moyen d'électrodes (66) par la source de puissance et le fonctionnement de l'assemblage de support et d'alimentation d'électrodes (64) pour ajuster lesdits moyens d'électrodes (66) en direction verticale.

30. Procédé de surfaçage sous laitier électroconducteur d'une tôle métallique, dans lequel la tôle est déplacée par rapport à un arrangement de moule de fondant pour permettre le revêtement sous laitier électroconducteur d'une surface supérieure de la tôle au moyen d'une électrode suspendue ayant une extrémité inférieure avancée dans ledit arrangement de moule, caractérisé en ce que ledit procédé comprend les étapes:
(a) présenter la tôle à un assemblage d'alimentation de tôle comprenant une table d'alimentation (12) allongée, disposée horizontalement, ayant une section (A) d'extrémité d'approche et une section (R) d'extrémité de sortie,
(b) transporter une tôle (P) avec une surface majeure de celle-ci tournée vers le haut, le long de ladite table d'alimentation (12) dans une direction d'alimentation à partir de la section (A) d'extrémité d'approche vers la section (R) d'extrémité de sortie, et
(c) soumettre ladite tôle (P) à une opération sous laitier électroconducteur dans une station de surfaçage (S) se trouvant entre les sections (A,R) de la table d'alimentation (12) pour fournir une couche de revêtement métallique sur ladite surface tournée vers le haut, ladite opération comprenant:
(i) passer la tôle métallique (P), à ladite station de surfaçage (S), sous un arrangement de moule de fondant (70) et sous un assemblage (64) de support et d'alimentation d'électrodes ayant des moyens d'électrodes suspendus verticalement en alignement avec l'intérieur dudit arrangement de moule (70);
(ii) opérer ledit assemblage de support et d'alimentation d'électrodes (64) pour abaisser les moyens d'électrodes (66) dans ledit arrangement de moule (70) pour amener une extrémité inférieure des moyens d'électrodes (66) en contact avec ladite surface supérieure et pour établir un courant circulant entre les moyens d'électrodes (66) et ladite tôle métallique (P) sous l'action de la puissance électrique fournie aux moyens d'électrodes (66) par une source de puissance dans un circuit complété par ladite tôle métallique (P);
(iii) opérer ledit assemblage de support et d'alimentation d'électrodes (64), après l'établissement du flux dudit courant, pour soulever les moyens d'électrodes (66) jusqu'à une hauteur initiant un arc entre l'extrémité inférieure des moyens d'électrodes (66) et ladite surface tournée vers le haut;
(iv) après l'établissement dudit arc, charger du fondant dans l'arrangement de moule (70) et fondre ledit fondant dans ledit moule pour établir un bain de laitier fondu qui se trouve sur ladite surface supérieure et qui submerge et éteint ledit arc; et
(v) alimenter une matière poudreuse d'alliage métallique vers ledit arrangement de moule (70), tandis que ledit arrangement de support et d'alimentation d'électrodes est contrôlé pour maintenir l'extrémité inférieure desdits moyens d'électrodes (66) à une hauteur opérationnelle au-dessus de la surface supérieure pour maintenir une opération sous laitier électroconducteur efficace par conduction dans ledit bain de laitier, ladite matière d'alliage métallique étant prévue à l'interface entre ledit bain de laitier et ladite surface supérieure et étant fondue dans ledit arrangement de moule (70) pour revêtir ladite surface supérieure, quand la tôle métallique (P) est déplacée sous ledit arrangement de moule.

31. Procédé selon la revendication 30, caractérisé en outre en ce que ladite matière d'alliage métallique est prévue sous forme d'un mélange mesuré et consolidée de poudre d'alliage prérevêtu sur ladite surface majeure avant de présenter ladite tôle métallique (P) audit assemblage d'alimentation de tôle.

32. Procédé selon la revendication 30 ou 31, caractérisé en outre en ce que ladite tôle (P) est transportée vers ladite installation de surfaçage (S) sous l'action d'une première paire de rouleaux d'alimentation (42a,44a) transversaux, espacés en direction verticale, se trouvant dans la section (A) d'extrémité d'approche dudit assemblage d'alimentation de tôle, ladite tôle étant passée en direction d'alimentation entre lesdits rouleaux (42a,44a) sous l'action d'un moteur d'entraînement (Ma) fonctionnant pour entraîner au moins un des rouleaux de ladite première paire.

33. Procédé selon une des revendications 30 à 32, caractérisé en outre en ce que ladite tôle (P) est transportée de ladite installation de surfaçage (S) sous l'action d'une seconde paire de rouleaux transversaux (42,44), espacés en direction verticale, situés à la section (R) d'extrémité de sortie dudit assemblage d'alimentation de tôle, ladite tôle (P) étant passée en direction d'alimentation entre lesdits rouleaux (42,44) de ladite seconde paire sous l'action d'un moteur d'entraînement (M) fonctionnant pour entraîner au moins un des rouleaux de ladite seconde paire.

34. Procédé selon une des revendications 30 à 33, caractérisé en outre en ce que ladite tôle (P) est contrainte à ses bords latéraux pour empêcher le déplacement latéral par rapport à ladite direction d'alimentation, quand elle est transportée le long de la table d'alimentation.

35. Procédé selon une des revendications 30 à 34, caractérisé en outre en ce que ladite tôle (P) passe sous ledit arrangement de moule de fondant (70) de sorte que la surface supérieure de ladite tôle (P) substantiellement ferme un fond ouvert dudit arrangement de moule de fondant (70) et retient au moins partiellement ledit bain de laitier fondu dans ledit arrangement de moule (70).

36. Procédé selon la revendication 35, caractérisé en outre en ce qu'un sabot respectif (88), adjacent à chaque côté de l'assemblage d'alimentation de tôle, est pressé pour former un joint contre un bord latéral de ladite tôle (P), quand celle-ci passe sous l'arrangement de moule de fondant (70), la tôle (P) et les sabots (88) fermant ensemble substantiellement complètement ledit fond ouvert pour retenir ledit bain de laitier fondu dans ledit arrangement de moule de fondant (70), un moyen de refroidissement étant circulé à travers une paroi périphérique définissant ledit arrangement de moule de fondant (70).

37. Procédé selon une des revendications 30 à 36, caractérisé en outre en ce que lesdits moyens d'électrodes (66) comprennent une pluralité d'électrodes allongées (66), chacune des électrodes étant tenue par un support d'électrode respectif (112) ayant un moyen d'alimentation d'électrode (126,128) respectif associé, lesdites électrodes (66) étant disposées verticalement dans un arrangement espacé laterélament par rapport à ladite direction d'alimentation, chaque moyen d'alimentation d'électrode (126,128) étant actionné individuellement pour amener l'extrémité inférieure de son électrode (66) en contact avec ladite tôle métallique (P) pour établir ledit flux de courant, pour lever son électrode vers ladite hauteur de fonctionnement pour initier ledit arc et pour retenir l'extrémité inférieure de son électrode à ladite distance pour maintenir l'opération sous laitier électroconducteur.

38. Procédé selon une des revendications 30 à 37, caractérisé en outre en ce que ladite tôle (P) est maintenue par rapport au fond dudit arrangement de moule de fondant (70) au moyen d'un arrangement de sole de four (110) qui s'appuie contre la tôle (P) d'en bas, l'arrangement de sole de four (110) fournissant un refroidissement de la tôle (P), un moyen refroidisseur étant circulé à travers l'arrangement de sole de four (110) et réglant le degré de refroidissement de la tôle (P), ledit arrangement de sole de four (110) étant au choix forcé vers le haut de sorte à s'appuyer contre ladite plaque (P) d'en bas.

39. Procédé selon une des revendications 30 à 38, caractérisé en outre en ce que le déplacement de ladite tôle (P) le long de ladite table d'alimentation (12), l'alimentation de puissance électrique vers les moyens d'électrodes (66) et le fonctionnement dudit assemblage de support et d'alimentation d'électrodes (64) pour ajuster lesdits moyens d'électrodes (66) en direction verticale sont surveillés ou surveillés et réglés pendant ladite opération sous laitier électroconducteur de sorte à maintenir le niveau requis d'efficacité de ladite opération.
